Europäisches Patentamt

European Patent Office

Office européen des brevets

(19)

(11) EP 0 810 407 B1

(12) EUROPÄISCHE PATENTSCHRIFT

(45) Veröffentlichungstag und Bekanntmachung des Hinweises auf die Patenterteilung:
09.10.2002 Patentblatt 2002/41

(51) Int Cl.7: **F24D 12/02**, F24D 3/08, F24H 1/10

(21) Anmeldenummer: 97108363.9

(22) Anmeldetag: 23.05.1997

(54) **Verfahren und Vorrichtung zur Nutzung der die restliche fühlbare und die latente Wärme umfassenden Restwärme eines Abgases einer Feuerungsanlage**

Procedure and installation for recovering the sensible and latent heat in the fumes of a furnace

Procédure et installation pour la récupération de la chaleur sensible et latente dans les fumées d'un foyer

(84) Benannte Vertragsstaaten:
AT CH DE FR LI

(30) Priorität: 31.05.1996 DE 19621990

(43) Veröffentlichungstag der Anmeldung:
03.12.1997 Patentblatt 1997/49

(73) Patentinhaber: Deutsches Zentrum für Luft- und Raumfahrt e.V.
51147 Köln (DE)

(72) Erfinder:
• **Farago, Zoltan**
**74747 Merchingen (DE)**
• **Adis, Erich**
**74239 Hardthausen (DE)**

(74) Vertreter: **Hoeger, Stellrecht & Partner**
**Uhlandstrasse 14 c**
**70182 Stuttgart (DE)**

(56) Entgegenhaltungen:
EP-A- 0 775 873        DE-A- 2 512 233
DE-A- 3 344 089

**Beschreibung**

Die vorliegende Erfindung betrifft ein Verfahren zur Nutzung der die restliche fühlbare und die latente Wärme umfassenden Restwärme eines Abgases einer Feuerungsanlage, insbesondere wenn ein Brenner nur zeitweise betätigt wird, bei dem das Abgas in einem Restwärmetauscher Wärme an ein Wärmetauschmedium abgibt und aus dem Wärmetauschmedium Wärme an Heizwasser in einem Heizwasserkreislauf, welcher einen Heizwasserkessel umfaßt, überführt wird.

Ferner betrifft die vorliegende Erfindung eine Vorrichtung zur Nutzung der die restliche fühlbare und die latente Wärme umfassenden Restwärme eines Abgases einer Feuerungsanlage, insbesondere wenn ein Brenner nur zeitweise betätigt wird, welche einen Restwärmetauscher umfaßt, durch den Wärme von dem Abgas an ein Wärmetauschmedium abgegeben wird.

Solche Verfahren und Vorrichtungen sind aus dem Stand der Technik bekannt.

Insbesondere ist es bekannt, die Restwärme eines Abgases einer Feuerungsanlage bei Kesselauslastungen beispielsweise größer als 20 % auszunutzen. Jedoch haben diese Verfahren den Nachteil, daß bei kleinerer Kesselauslastung (beispielsweise unter 20 %) der Wirkungsgrad der mit diesen Verfahren betriebenen Anlagen stark abfällt.

Die DE-A-33 44 089 offenbart eine Vorrichtung für Heizungsanlagen zur Verbesserung der Ausnutzung des Energieinhalts von Brennstoffen, bei der in ein Rauchgasabzugsrohr eines Heizkessels ein Wärmetauscher eingeschaltet ist.

Die DE-A-25 12 233 offenbart ein Verfahren und eine Vorrichtung zur Wärmerückgewinnung aus Rauchgasen brennstoffbeheizter Kessel, in denen Wasser erwärmt wird, wobei mit aus dem Heizkessel austretenden Rauchgasen ein flüssiges Zwischenmedium aufgeheizt wird und das in den Heizkessel eintretende Wasser durch Wärmeaustausch mit dem Zwischenmedium vorgewärmt wird.

Der vorliegenden Erfindung liegt daher die Aufgabe zugrunde, ein Verfahren und eine Vorrichtung der eingangs genannten Art derart zu verbessern, daß ein gegenüber herkömmlichen Verfahren und Vorrichtungen größerer Anteil der Restwärme des Abgases genutzt werden kann.

Diese Aufgabe wird bei der vorliegenden Erfindung mit den Merkmalen des Oberbegriffes von Anspruch 1 dadurch gelöst, daß die Überführung von Wärme an das Heizwasser aus einer Wärmetauschmediummenge erfolgt, deren Volumen größer ist als das ungefähr Dreifache eines heizwasseraufnehmenden Volumens des Heizwasserkessels.

Das erfindungsgemäße Konzept bietet den Vorteil, daß die Restwärme zur Erwärmung des Wärmetauschmediums auch in der Zeit ausgenutzt werden kann, in der ein Brenner der Feuerungsanlage stillsteht. Bei einer Mehrzahl von Tagen einer Heizperiode liegt die mittlere tägliche Kesselauslastung üblicherweise unterhalb von 20 %. Deshalb wird durch das erfindungsgemäße Konzept insbesondere eine Wirkungsgradverbesserung der Feuerungsanlage bezogen auf eine gesamte Heizungsperiode erreicht.

Da die Wärmekapazität des Wärmetauschmediumkondensats, aus dem Wärme an Heizwasser überführt wird, aufgrund des größeren Volumens größer ist als die Wärmekapazität des Heizwassers im Heizkessel, bietet das erfindungsgemäße Konzept ferner den Vorteil, daß Temperaturschwankungen des Kondensats während einer Betätigungszeit des Brenners geringer gehalten werden als die Temperaturschwankungen des Heizwassers im Heizkessel. Dadurch wird verhindert, daß die Kondensationstemperatur während der Brennerbetätigung zu stark ansteigt. Damit lassen sich wiederum niedrigere Kondensationstemperaturen und daher höhere Wirkungsgrade für die Feuerungsanlage erreichen.

Besonders günstig arbeitet das Verfahren, wenn das Volumen der Wärmetauschmediummenge, durch welche Wärme an das Heizwasser überführt wird, ungefähr fünffach größer ist als das heizwasseraufnehmende Volumen des Heizwasserkessels.

Vorteilhafterweise wird die Wärme an Heizwasser in einem Heizwasserrücklauf überführt, so daß keine zu starke Aufheizung des Wärmetauschmediums eintritt.

In einer besonders günstigen Ausführungsform wird direkt aus im Restwärmetauscher erwärmtem Wärmetauschmediumkondensat Wärme an das Heizwasser überführt. Dadurch können Wärmeverluste verringert werden.

Auf besonders einfache Weise kann die Wärmeabgabe von dem Wärmetauschmedium an das Heizwasser dadurch erfolgen, daß das Heizwasser durch einen Kondensatsumpf des Restwärmetauschers geführt wird. Dadurch tritt kein Wärmeverlust durch die Führung von Kondensatmedium zur Wärmeabgabe an das Heizwasser auf und außerdem ist durch den Kondensatsumpf eine Flüssigkeitsmenge an Wärmetauschmedium direkt bereitgestellt.

Es kann auch günstig sein, daß das Heizwasser zur Wärmeaufnahme durch einen Wärmetauschmedium-Heizwasser-Wärmetauscher geführt wird, welcher direkt aus dem Restwärmetauscher kommendes erwärmtes Wärmetauschmedium aufnimmt. Dadurch kann der Restwärmetauscher konstruktiv einfacher gehalten werden, da auf Heizwasserführungen durch den Restwärmetauscher verzichtet werden kann.

Damit das Wärmetauschmedium Wärme aus dem Abgas aufnehmen kann, ist es vorteilhaft, wenn es in einem Kondensatkreislauf befördert wird.

Günstig ist es, wenn die Beförderung des Wärmetauschmediums in dem Kondensatkreislauf an die Betätigung des Brenners gekoppelt ist, da bei Nichtbetätigung des Brenners dem Restwärmetauscher kein Abgas zugeführt wird und daher das Wärmetauschmedium auch keine Restwärme aus dem Abgas aufnehmen kann.

Wird das Wärmetauschmedium in einem Restwärmetauscher-Kondensatkreislauf geführt, welcher den Wärmetauschmedium-Heizwasser-Wärmetauscher umfaßt, in welchem das Wärmetauschmedium Wärme an das Heizwasser abgibt, dann können Temperaturschwankungen des Kondensats besonders gut vermindert werden, insbesondere wenn das Wärmetauschmedium eine große Wärmekapazität aufweist.

Dazu ist es vorteilhaft, daß das Wärmetauschmedium im Restwärmetauscher-Kondensatkreislauf durch eine Pumpe kontinuierlich befördert wird, um einen gleichmäßigen Kreislauf des Wärmetauschmediums aufrechtzuerhalten.

Das Wärmetauschmedium im Restwärmetauscher-Kondensatkreislauf kann auch mittels Konvektion bzw. Schwerkraft befördert werden, so daß auf eine Pumpe verzichtet werden kann.

Eine weitere Verbesserung des Wirkungsgrades der Feuerungsanlage ergibt sich, wenn Brauchwasser durch den Kondensatsumpf des Restwärmetauschers zur Aufnahme von Wärme aus dem Wärmetauschmedium geführt wird, da dadurch für eine weitere Abkühlung des Kondensats gesorgt ist.

Zur Erzielung eines guten Wirkungsgrades einer Anlage, die auch eine Brauchwasseraufbereitung umfaßt, ist es günstig, wenn durch Wärmetauschmedium vorgewärmtes Brauchwasser einem Brauchwasser-Heizwasser-Wärmetauscher zugeführt wird. Dadurch steht dem Brauchwasser-Heizwasser-Wärmetauscher bereits vorgewärmtes Brauchwasser zur Verfügung, was eine schnellere und energiesparendere Erwärmung auf eine vorgesehene Endtemperatur des Brauchwassers begünstigt.

Alternativ dazu kann durch Wärmetauschmedium vorgewärmtes Brauchwasser auch einem Warmbrauchwasserspeicher zugeführt werden, welcher von Heizwasser zur Erwärmung des Brauchwassers durchströmt ist.

Konstruktiv besonders vorteilhaft ist es, wenn durch Wärmetauschmedium vorgewärmtes Brauchwasser dem Warmbrauchwasserspeicher mittels Konvektion zuströmt und eine entsprechende Menge an Brauchwasser vom Warmbrauchwasserspeicher zum Restwärmetauscher mittels Schwerkraft strömt, da dann auf weitere strömungsfördernde Mittel wie Pumpen oder dergleichen verzichtet werden kann.

Bei einer Vorrichtung zur Nutzung der die restliche fühlbare und die latente Wärme umfassenden Restwärme eines Abgases einer Feuerungsanlage mit den Merkmalen des Oberbegriffes von Anspruch 17 wird die der Erfindung zugrundeliegende Aufgabe dadurch gelöst, daß die Vorrichtung eine Einrichtung zur Übertragung von Wärme von dem Wärmetauschmedium auf Heizwasser umfaßt, deren wärmetauschmedium-aufnehmendes Volumen mindestens dreifach größer ist als ein heizwasseraufnehmendes Volumen eines Heizwasserkessels, und daß die Einrichtung in einem Heizwasserrücklauf eines Heizwasserkreislaufes angeordnet ist.

Die erfindungsgemäße Vorrichtung bietet somit die bereits im Zusammenhang mit dem erfindungsgemäßen Verfahren nach Anspruch 1 angegebenen Vorteile.

Bevorzugte Ausgestaltungen der erfindungsgemäßen Vorrichtung sind Gegenstand der Ansprüche 18 bis 40, deren Vorteile ebenfalls bereits im Zusammenhang mit den bevorzugten Ausgestaltungen des erfindungsgemäßen Verfahrens gemäß den Ansprüchen 2 bis 16 erläutert wurden.

Ein zusätzlicher Vorteil ist gegeben, wenn im Restwärmetauscher ein Temperaturfühler angeordnet ist, durch welchen die Temperatur des Kondensats überwachbar ist. Es können dann zu hohe Kondensattemperaturen, die eine Nutzung der Restwärme des Abgases verhindern, unverzüglich erkannt und geeignete Maßnahmen ergriffen werden, beispielsweise die Zuführung der Abgase des Brenners direkt in einen Schornstein oder Abschalten der Pumpe, durch welche das Wärmetauschmedium im Kondensatkreislauf befördert wird.

Es kann auch vorgesehen sein, daß ein Heizwasservorlauf einen Mischer aufweist, durch welchen Heizwasser aus dem Heizwasserrücklauf in einen Heizungsvorlauf leitbar ist. Dadurch weist die Heizungsanlage eine zusätzliche Regelungsmöglichkeit auf, mit der sich ihr Wirkungsgrad verbessern läßt.

Weitere Merkmale und Vorteile der Erfindung sind Gegenstand der nachfolgenden Beschreibung und zeichnerischen Darstellung von Ausführungsbeispielen.

In der Zeichnung zeigen:

Fig. 1 eine schematische Gesamtdarstellung einer ersten Ausführungsform der erfindungsgemäßen Vorrichtung zur Nutzung der Restwärme eines Abgases einer Feuerungsanlage;

Fig. 2 eine schematische Darstellung eines Restwärmetauschers der ersten Ausführungsform der erfindungsgemäßen Vorrichtung, bei der frei fallende Kondensatstrahlen in ein monodisperses Kondensatspray zerfallen;

Fig. 3 bis 6 jeweils einen Längsschnitt durch eine in einer Düsenplatte des Restwärmetauschers der ersten Ausführungsform der erfindungsgemäßen Vorrichtung verwendbare Düsenbohrung;

Fig. 7 einen Rayleigh-Zerfall eines frei fallenden Kondensatstrahls in ein monodisperses Kondensatspray bei einer kleinen Zerfallslänge;

Fig. 8    einen Rayleigh-Zerfall eines frei fallenden Kondensatstrahls in ein monodisperses Kondensatspray bei einer gegenüber der Fig. 7 größeren Zerfallslänge;

Fig. 9    einen unerwünschten Membran-Zerfall eines frei fallenden Kondensatstrahls in ein Kondensatspray mit breitem Tropfengrößenspektrum;

Fig. 10    einen unerwünschten Fiber-Zerfall eines frei fallenden Kondensatstrahls in ein Kondensatspray mit breitem Tropfengrößenspektrum;

Fig. 11    eine schematische Darstellung eines Kondensatkreislaufes einer zweiten Ausführungsform der erfindungsgemäßen Vorrichtung, bei der ein Wärmeaustausch zwischen Wärmetauschmedium und Heizwasser/Brauchwasser außerhalb des Restwärmetauschers erfolgt;

Fig. 12    eine schematische Darstellung einer dritten Ausführungsform, bei der das Wärmetauschmedium in zwei Kreisläufen geführt ist; und

Fig. 13    eine schematische Gesamtdarstellung einer vierten Ausführungsform einer erfindungsgemäßen Vorrichtung, welche einen Warmbrauchwasserspeicher umfaßt.

Gleiche oder funktional äquivalente Elemente sind in allen Figuren mit denselben Bezugszeichen bezeichnet.

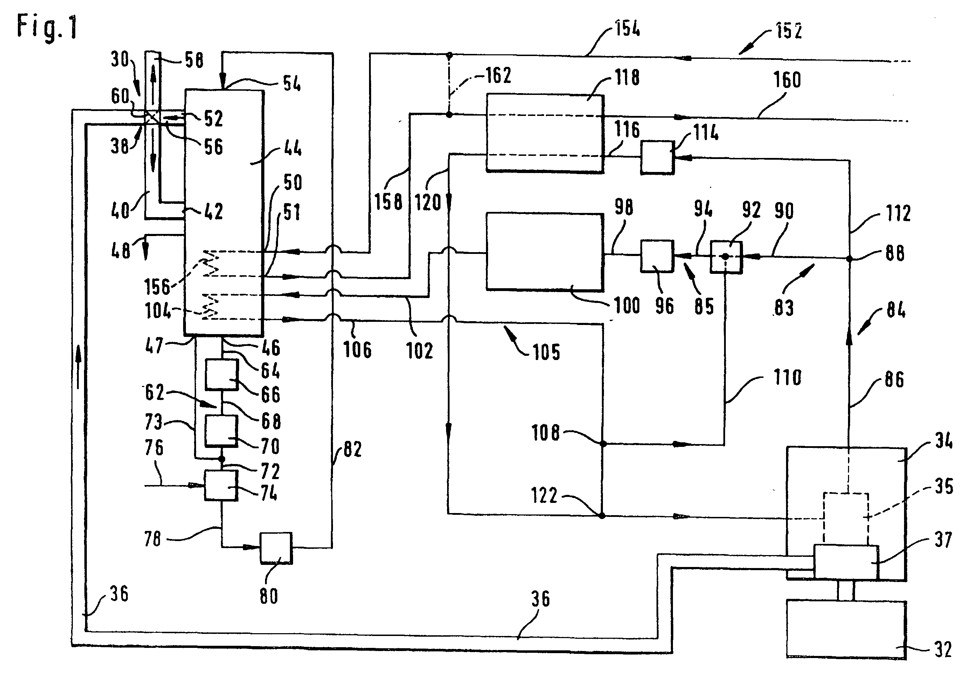

Eine in Fig. 1 insgesamt schematisch dargestellte und als Ganzes mit 30 bezeichnete erste Ausführungsform einer erfindungsgemäßen Vorrichtung zur Nutzung der Restwärme eines Abgases einer Feuerungsanlage umfaßt als Feuerungsanlage einen Brenner 32, der mit einem Heizwasserkessel 34 zur Erhitzung von in letzterem in einem heizwasseraufnehmenden Volumen 35 enthaltenem Heizwasser verbunden ist.

Der Brenner 32 kann mit beliebigen flüssigen, gasförmigen und festen Brennstoffen, beispielsweise mit Heizöl, Erdgas oder Braunkohle, betrieben sein.

Eine Abgasleitung 36 für das bei dem Verbrennungsprozeß im Brenner 32 entstehende heiße Abgas führt von dem Brenner 32 durch einen Feuerraum 37 des Heizkessels 34 zu einem Temperaturwechsler 38, der als vierarmiges Rohrkreuz ausgebildet ist, wobei jeweils einer der Arme nach oben bzw. nach unten und weist

zwei weitere Arme in horizontale Richtungen weisen. Die Abgasleitung 36 ist an einen der horizontal ausgerichteten Arme des Temperaturwechslers 38 angeschlossen.

An den nach unten weisenden Arm des Temperaturwechslers 38 ist ein Abgaszuführrohr 40 angeschlossen, das an seinem anderen Ende an einem Abgaseintritt 42 in einen unteren Bereich eines Restwärmetauschers 44 mündet.

In einer Variante einer Ausführungsform (in der Fig. nicht gezeigt) kann es vorgesehen sein, daß die Abgasleitung 36 über den Abgaseintritt 42 direkt in den Restwärmetauscher ohne Zwischenschaltung eines Temperaturwechslers 38 mündet.

Der Restwärmetauscher 44 wird weiter unten detailliert beschrieben. Er weist beispielsweise die Form eines aufrechtstehenden, an Ober- und Unterseite geschlossenen Hohlzylinders auf und ist in seinem unteren Bereich außer mit dem Abgaseintritt 42 mit einem Kondensataustritt 46 und einem oberhalb desselben angeordneten Kondensatüberlauf 48 versehen. In einer Variante einer Ausführungsform weist der Restwärmetauscher 44 in seinem unteren Bereich einen Eintritt 50 und einen Austritt 51 auf, mittels welcher Leitungen durch den unteren Bereich des Restwärmetauschers führbar sind. Es können auch mehrere solcher Eintritte und Austritte vorgesehen sein. Ferner weist der Restwärmetauscher 44 in seinem oberen Bereich einen Abgasaustritt 52 sowie einen oberhalb desselben angeordneten oberen Kondensateintritt 54 auf.

Der Abgasaustritt 52 ist über ein Abgasabführrohr 56 mit dem der Abgasleitung 36 gegenüberliegenden horizontal ausgerichteten Arm des Temperaturwechslers 38 verbunden.

An den nach oben weisenden Arm des Temperaturwechslers 38 ist ein Schornsteinzuführrohr 58 angeschlossen, das zu einem (nicht dargestellten) Schornstein führt.

In der Variante eine Ausführungsform, bei der kein Temperaturwechsler vorgesehen ist, ist das Schornsteinzuführrohr 58 direkt mit dem Abgasaustritt 52 ohne Zwischenschaltung eines Temperaturwechslers verbunden. In diesem Fall kann Abgas nicht direkt aus der Abgasleitung 36 in den Schornstein gelangen.

Der Temperaturwechsler 38 weist in einem zentralen Bereich, in dem die vier Rohrarme zusammentreffen, eine zwischen einer Durchleit- und einer Umleitstellung schwenkbare Umlenkplatte 60 auf.

In der in Fig. 1 durchgezogen dargestellten Durchleitstellung der Umlenkplatte 60 sind die Abgasleitung 36 und das Abgaszuführrohr 40 miteinander verbunden, jedoch gegenüber dem Abgasabführrohr 56 und dem Schornsteinzuführrohr 58 abgeschlossen. Andererseits sind in dieser Durchleitstellung auch das Abgasabführrohr 56 und das Schornsteinzuführrohr 58 miteinander verbunden.

Daher kann in der Durchleitstellung der Umlenkplatte 60 vom Brenner 32 durch die Abgasleitung 36 zum Temperaturwechsler 38 geführtes heißes Abgas durch das Abgaszuführrohr 40 in den Restwärmetauscher 44 gelangen, in dem es auf noch zu besprechende Weise gekühlt und gereinigt wird, worauf es den Restwärmetauscher 44 durch das Abgasabführrohr 56 wieder verläßt und schließlich in das Schornsteinzuführrohr 58 entweicht.

In der in Fig. 1 mit einer durchbrochenen Linie dargestellten Umleitstellung der Umlenkplatte 60 sind dagegen die Abgasleitung 36 und das Schornsteinzuführrohr 58 miteinander verbunden und gegenüber dem Abgaszuführrohr 40 und dem Abgasabführrohr 56 abgeschlossen, so daß in dieser Stellung der Umlenkplatte 60 das heiße, vom Brenner 32 kommende Abgas direkt aus der Abgasleitung 36 in das Schornsteinzuführrohr 58 entweicht, ohne zuvor in den Restwärmetauscher 44 zu gelangen.

Der Restwärmetauscher 44 ist Bestandteil eines als Ganzes mit 62 bezeichneten Kondensatkreislaufs. Die Strömungsrichtung des Kondensats durch den Kondensatkreislauf 62 ist in Fig. 1 mittels Pfeilspitzen angegeben.

Der Kondensataustritt 46 des Restwärmetauschers 44 ist über eine Kondensatleitung 64 mit einem Neutralisator 66 verbunden, der zur Neutralisierung saurer Kondensatkomponenten dient und zu diesem Zweck beispielsweise mit Hydrolit gefüllt ist, welches einen MgO-Gehalt von ungefähr 75% aufweist und als weitere Bestandteile Wasser, Kohlendioxid sowie Spuren von Kalzium-, Eisen-, Aluminium- und Siliziumoxid umfaßt. Der Neutralisator 66 ist vorzugsweise so an den Kondensatkreislauf 62 angeschlossen, daß er von oben nach unten von dem Kondensat durchströmt wird.

Von dem Neutralisator 66 führt eine weitere Kondensatleitung 68 zu einem Kondensatfilter 70, das eine Maschenweite von beispielsweise weniger als 100 μm aufweist.

Das Kondensatfilter 70 kann auch im Neutralisator 66 integriert sein, wobei dann die Kondensatleitung 68 entfällt.

Von dem Kondensatfilter 70 führt eine weitere Kondensatleitung 72 zu einem Luftinjektor 74.

Der Luftinjektor 74 dient der Oxidation von in dem Kondensat gelösten Sulfit-Ionen zu ungiftigen Sulfat-Ionen mittels Luft, die dem Luftinjektor 74 über eine an denselben angeschlossene Luftzuführleitung 76 zugeführt wird.

Der Luftinjektor 74 ist innerhalb des Kondensatkreislaufs 62 in Strömungsrichtung hinter dem Neutralisator 66 angeordnet, um eine Luftsiphonbildung im Neutralisator 66 durch im Luftinjektor 74 injizierte Oxidationsluft zu vermeiden.

In eine Alternative einer Ausführungsform ist vorgesehen, daß der Restwärmetauscher 44 einen weiteren Kondensataustritt 47 in seinem unteren Bereich aufweist und daß aus diesem Kondensataustritt 47 über eine Leitung 73 Kondensat in die Leitung 72 fließen kann. In diesem Fall ist kein Luftinjektor vorgesehen.

Der Luftinjektor 74 ist über eine Kondensatleitung 78 mit einem saugseitigen Eingang einer Kondensatpumpe 80 verbunden, die zur Beförderung des Kondensats durch den Kondensatkreislauf 62 dient. Die Pumpe wird durch eine Steuereinheit (in der Fig. nicht gezeigt) gesteuert, welche die Betätigung oder Nichtbetätigung des Brenners 32 registrieren kann.

Von einem druckseitigen Ausgang der Kondensatpumpe 80 führt eine Kondensatleitung 82 zu dem oberen Kondensateintritt 54 des Restwärmetauschers 44.

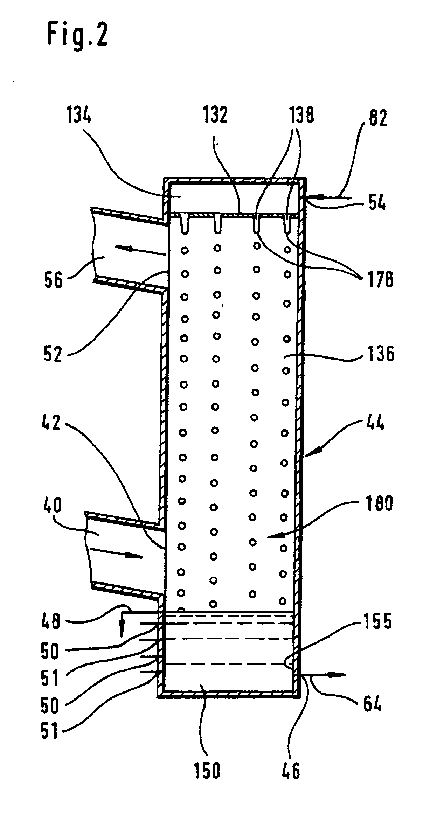

Der Restwärmetauscher 44 der ersten Ausführungsform der erfindungsgemäßen Vorrichtung ist ein Monodispers-Kondensatspray-Wärmetauscher, der in Fig. 2 schematisch dargestellt ist.

Der Monodispers-Kondensatspray-Wärmetauscher 44 umfaßt eine horizontal angeordnete zylindrische Düsenplatte 132, die den zylindrischen Innenraum des Kondensatspray-Wärmetauschers 44 in eine oberhalb der Düsenplatte 132 angeordnete Düsenvorkammer 134 und einen unterhalb der Düsenplatte 132 angeordneten Wärmetauscherraum 136 teilt.

Die Düsenplatte 132 wird in vertikaler Richtung von mehreren Düsenbohrungen 138 durchsetzt.

Die Mittelachsen einander benachbarter Düsenbohrungen 138 weisen einen Abstand voneinander auf, der vorzugsweise dem 15- bis 20-fachen des Durchmessers der Auslaßöffnung einer Düsenbohrung 138 entspricht.

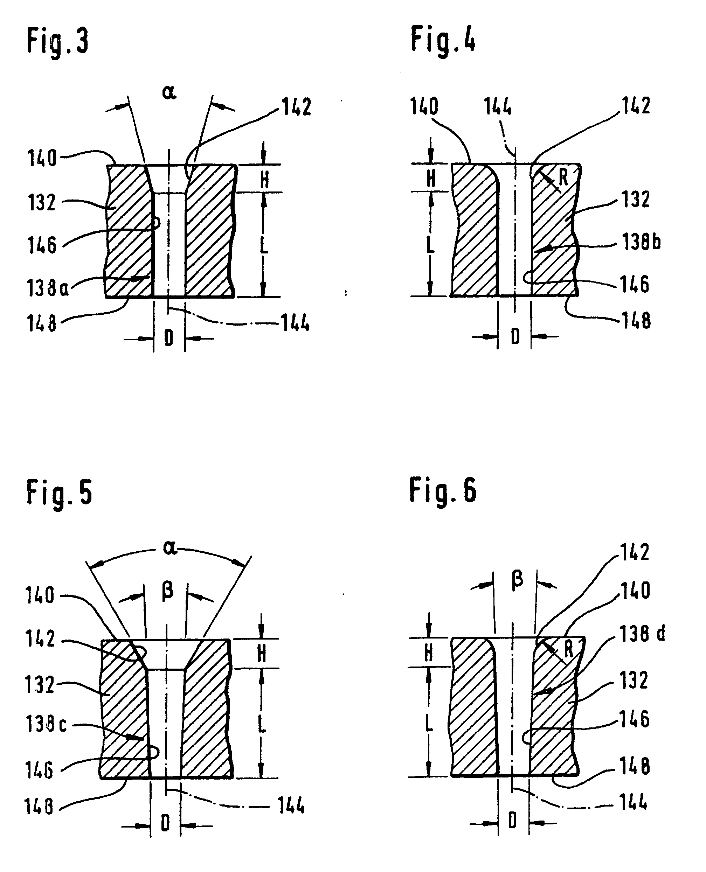

Eine in Fig. 3 dargestellte erste Ausführungsform 138a einer solchen Düsenbohrung 138 weist einen auf einer Oberseite 140 der Düsenplatte 132 mündenden Einlauf 142 in Form eines sich nach oben hin erweiternden Kegelstumpfes mit vertikaler Achse 144, Öffnungswinkel $\alpha$ und Länge H auf.

Der Einlauf 142 mündet an seiner Unterseite in einen zylindrischen, zu dem Einlauf 142 koaxialen Düsenkanal 146 mit der Länge L, dessen Durchmesser D dem kleinsten Durchmesser des kegelstumpfförmigen Einlaufs 142 entspricht und der auf einer Unterseite 148 der Düsenplatte 132 mündet.

Um zu erreichen, daß ein aus der Düsenbohrung 138a austretender Kondensatstrahl in ein monodisperses Kondensatspray zerfällt, werden vorzugsweise der Öffnungswinkel $\alpha$ kleiner als ungefähr 60°, die Länge H des Einlaufs 142 größer oder ungefähr gleich dem Durchmesser D des Düsenkanals 146 und die Länge L des Düsenkanals 146 größer als der ungefähr dreifache und kleiner als der ungefähr fünffache Durchmesser D des Düsenkanals 146 gewählt.

Eine in Fig. 4 dargestellte und als Ganzes mit 138b bezeichnete, alternative zweite Ausführungsform einer Düsenbohrung 138 in der Düsenplatte 132 unterscheidet sich von der in Fig. 3 dargestellten ersten Ausführungsform lediglich dadurch, daß der Einlauf 142 nicht durch die Mantelfläche eines Kegelstumpfs, sondern durch einen Ausschnitt aus der Mantelfläche eines Kreistorus mit Radius R begrenzt wird. Im übrigen stimmt die zweite Ausführungsform der Fig. 4 mit der in Fig. 3 dargestellten Ausführungsform überein.

Um zu erreichen, daß ein aus der Düsenbohrung 138b austretender Kondensatstrahl in ein monodisperses Kondensatspray zerfällt, wird der Radius R vorzugsweise größer oder ungefähr gleich dem Durchmesser des Düsenkanals 146 gewählt.

Eine in Fig. 5 dargestellte und als Ganzes mit 138c bezeichnete, alternative dritte Ausführungsform einer Düsenbohrung 138 in der Düsenplatte 132 unterscheidet sich von der in Fig. 3 dargestellten ersten Ausführungsform lediglich dadurch, daß der Düsenkanal 146 nicht zylindrisch ist, sondern die Form eines sich nach oben hin erweiternden Kegelstumpfes mit dem Öffnungswinkel β und der Länge L aufweist. Dabei stimmt der kleinste Durchmesser des kegelstumpfförmigen Einlaufs 142 mit dem größten Durchmesser des kegelstumpfförmigen Düsenkanals 146 überein und ist größer als der Mündungsdurchmesser D der Düsenbohrung 138c.

Im übrigen stimmt die dritte Ausführungsform 138c mit der in Fig. 3 dargestellten ersten Ausführungsform 138a überein.

Um zu erreichen, daß ein aus der Düsenbohrung 138c austretender Kondensatstrahl in ein monodisperses Kondensatspray zerfällt, werden vorzugsweise der Öffnungswinkel α kleiner als ungefähr 60°, der Öffnungswinkel β kleiner als ungefähr 10°, die Länge H des Einlaufs 142 größer als ungefähr 1/5 des Mündungsdurchmessers D und die Länge L des Düsenkanals 146 größer als ungefähr das dreifache des Mündungsdurchmessers D gewählt.

Eine in Fig. 6 dargestellte und als Ganzes mit 138d bezeichnete, alternative vierte Ausführungsform einer Düsenbohrung 138 in der Düsenplatte 132 unterscheidet sich von der in Fig. 5 dargestellten dritten Ausführungsform 138c lediglich dadurch, daß die Begrenzungsfläche des Einlaufs 142 nicht die Mantelfläche eines Kegelstumpfes, sondern ein Ausschnitt aus der Mantelfläche eines Kreistorus vom Radius R ist.

Im übrigen stimmt die vierte Ausführungsform 138d mit der dritten Ausführungsform 138c überein.

Um zu erreichen, daß ein aus der Düsenbohrung 138d austretender Kondensatstrahl in ein monodisperses Kondensatspray zerfällt, werden vorzugsweise der Öffnungswinkel β kleiner als ungefähr 10°, der Radius R größer als ungefähr 1/5 des Mündungsdurchmessers D und die Länge L des Düsenkanals 146 größer als ungefähr das dreifache des Mündungsdurchmessers D gewählt.

Wie in Fig. 2 zu sehen, mündet die Kondensatleitung 128 oberhalb der Düsenplatte 132 durch die Seitenwand des Restwärmetauschers 44 an dem oberen Kondensateintritt 54 in die Düsenvorkammer 134.

Im unteren Bereich des Restwärmetauschers 44 mündet der Kondensatüberlauf 48 durch die Seitenwand des Restwärmetauschers 44 in den Wärmetauscherraum 136. Der Raum vom Boden des Wärmetauscherraums 136 bis zur Höhe der Mündungsöffnung des Kondensatüberlaufs 48 ist mit Kondensat gefüllt, das einen Kondensatsumpf 150 bildet. Bevorzugterweise ist das Volumen 155, welches durch den Kondensatsumpf 150 eingenommen ist, ungefähr fünffach größer als das heizwasseraufnehmende Volumen 35 des Heizwasserkessels 34.

Die Seitenwand des Restwärmetauschers 44 weist Eintritte 50 und Austritte 51 auf, durch die Leitungen durch den Kondensatsumpf 150 zwischen einem Eintritt 50 und einem Austritt 51 führbar sind.

Die erfindungsgemäße Vorrichtung umfaßt, wie in Fig. 1 gezeigt, einen Heizwasserkreislauf 84, zu dem der von dem Brenner 32 beheizte Heizwasserkessel 34 zählt.

Eine Heizwasserleitung 86 führt von einem Ausgang des Heizwasserkessels 34 zu einer Abzweigung 88. Von der Abzweigung führt eine weitere Leitung 90 zu einem Eingang eines Mischers 92. Ein erster Ausgang des Mischers 92 ist über eine weitere Leitung 94 mit einer Eingangsseite einer Pumpe 96 verbunden. Eine weitere Leitung 98 verbindet die Pumpe 96 mit einer Heizkörperanordnung 100, die beispielsweise der Wärmeabgabe an die Luft von Innenräumen dient. Ein Kesselvorlauf 83 umfaßt die Leitungen 86 und 90 und ein Heizungsvorlauf 85 umfaßt die Leitungen 94 und 98.

Von der Heizkörperanordnung 100 führt eine Leitung 102 zu einem Eintritt 50 des Restwärmetauschers 44. Mittels einer Wärmetauscherschlange 104 wird das Heizwasser durch den Kondensatsumpf 150 des Restwärmetauschers 44 geführt. Eine weitere Leitung 106 führt von der Wärmetauscherschlange 104 durch einen Austritt 51 zu dem Heizwasserkessel 34. Die Leitungen 102 und 106 bilden mit der Wärmetauscherschlange 104 einen Heizwasserrücklauf 105.

Von einer Abzweigung 108, welche in der Leitung 106 liegt, führt eine Leitung 110 zu einem zweiten Eingang des Mischers 92.

Von der Abzweigung 88 führt im Heizwasservorlauf 83 eine weitere Heizwasserleitung 112 zu einer Pumpe 114 und von einem Ausgang der Pumpe 114 eine weitere Leitung 116 zu einem Heizwassereingang eines Heizwasser-Brauchwasser-Durchlauferhitzers 118. Von einem Heizwasserausgang dieses Durchlauferhitzers führt eine Leitung 120 zu einer Zusammenführung 122 in der Heizwasserrücklaufleitung 105, wobei die Zusammenführung 122 zwischen der Zusammenführung 108 und einem Heizwasserrücklaufeintritt in den Heizkessel 34 angeordnet ist.

Weiterhin umfaßt die Vorrichtung eine, wie in Fig. 1 gezeigt, als Ganzes mit 152 bezeichnete Brauchwasserzuführung. Kaltes Brauchwasser wird über eine Brauchwasserleitung 154 dem Restwärmetauscher 44 zur Vorwärmung zugeführt. Über einen Eintritt 50 wird die Brauchwasserleitung 154 durch den Kondensatsumpf 150 des Restwärmetauschers 44 geführt, wobei die Brauchwasserleitung 154 im Restwärmetauscher 44 eine Wärmetauschereinheit 156 aufweist. Dabei kann es sich beispielsweise um eine Wärmetauscherschlange oder eine Plattenwärmetauschereinheit handeln. Eine weitere Brauchwasserleitung 158, welche an einen Austritt 51 des Restwärmetauschers 44 gekoppelt ist, führt zu einem Brauchwassereingang des Heizwasser-Brauchwasser-Durchlauferhitzers 118. Von einem Ausgang dieses Durchlauferhitzers führt eine weitere Brauchwasserleitung 160 zu (nicht dargestellten) Brauchwasserentnahmestellen, wie beispielsweise einem Warmwasserhahn. Das Brauchwasser wird in dem Durchlauferhitzer 118 durch das Heizwasser im Gegenstromprinzip erwärmt.

In einer alternativen Ausführungsform ist vorgesehen, daß über eine Leitung 162 die Brauchwasserleitung 154 und die Brauchwasserleitung 158 direkt, d. h. ohne Durchführung von Brauchwasser durch den Restwärmetauscher 44, miteinander verbunden sind, so daß die Brauchwasserzuführung 152 von dem Kondensatkreislauf 62 entkoppelt ist.

Die vorstehend beschriebene erste Ausführungsform der erfindungsgemäßen Vorrichtung 30 arbeitet wie folgt:

Heizwasser aus dem Heizwasserkessel 34 gelangt durch den Kesselvorlauf 83 und den Heizungsvorlauf 85 in die Heizkörperanordnung 100, gibt beim Durchlaufen derselben Wärme ab und kehrt durch den Heizwasserrücklauf 105 zum Heizwasserkessel 34 zurück.

Da das Heizwasser durch das Durchlaufen des Heizwasserkreislaufes 84 Wärme verliert, nimmt die Durchschnittstemperatur des Heizwasserkessels 34 ab, bis sie unter eine Einschalttemperatur des Brenners 32 absinkt, bei der der Brenner 32 in Betrieb genommen wird, um das Heizwasser im Heizwasserkessel 34 wieder zu erwärmen. Erreicht das Wasser im Heizwasserkessel 34 eine Ausschalttemperatur des Brenners 32, so wird der Brenner 32 wieder abgeschaltet.

Außer durch die im wesentlichen kontinuierliche Wärmeentnahme durch den Heizwasserkreislauf 52 kann ein Absinken der Temperatur im Heizwasserkessel 34 auch durch eine während jeweils kurzer Zeitintervalle, die in unregelmäßigen Abständen aufeinanderfolgen, erfolgende Entnahme von Brauchwasser aus der Brauchwasserzuführleitung 160 bewirkt werden, da das Brauchwasser beim Durchströmen des Heizwasser-Brauchwasser-Durchlauferhitzers 118 dem Heizwasser im Heizwasserkessel 34 Wärme entzieht.

Während der Betriebsphasen des Brenners 32 entsteht durch Verbrennung des Brennstoffes (Öl, Kohle, Gas) im Brenner 32 ein Abgas, das durch die Abgasleitung 36 zum Temperaturwechsler 38 strömt. In Perioden relativ häufigen Brennerbetriebs befindet sich die Umlenkplatte 60 des Temperaturwechslers 38 in der Durchleitstellung, so daß sie das von der Abgasleitung 36 her kommende Abgas durch das Abgaszuführrohr 40 zum Abgaseintritt 42 des Restwärmetauschers 44 lenkt.

Die Strömungsrichtung des Abgases ist in den Fig. 1 und 2 durch Pfeile angegeben.

Während einer Betriebsphase des Brenners 32 wird auch die Kondensatpumpe 80 im Kondensatkreislauf 62 in Betrieb genommen.

Infolgedessen strömt das Kondensat durch die Kondensatleitung 82 und den oberen Kondensateintritt 54 in die Düsenvorkammer 134 des Restwärmetauschers 44.

Von dort wird das Kondensat unter einem geringen Überdruck von beispielsweise 0,1 bar durch die Düsenbohrungen 138 in der Düsenplatte 132 in den Wärmetauscherraum 136 gepreßt.

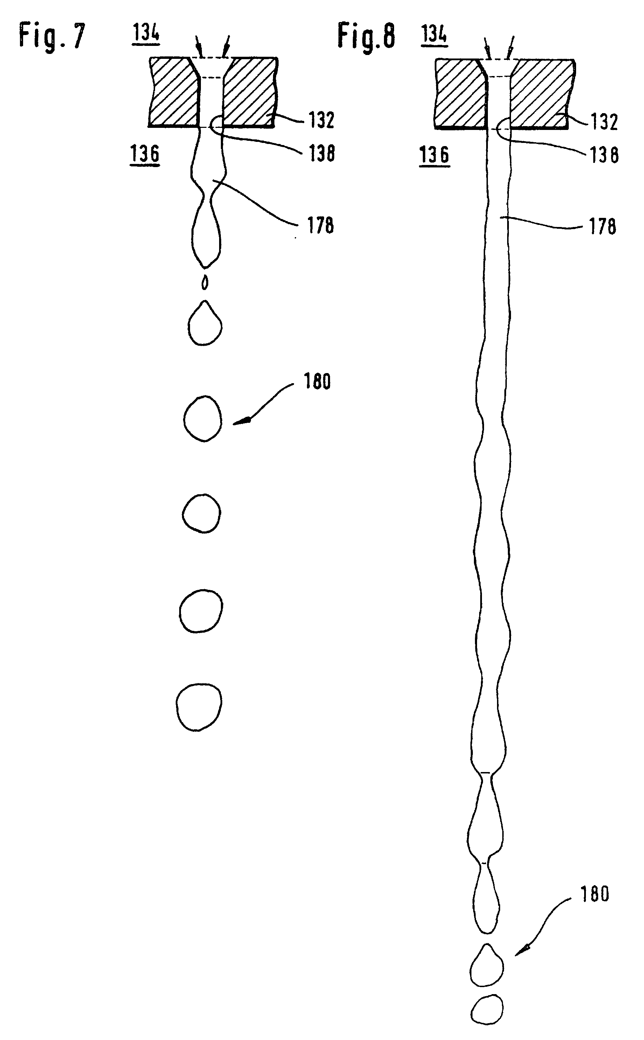

Wie in den Fig. 7 bis 10 dargestellt, tritt aus jeder der Düsenbohrungen 138 ein frei durch den Wärmetauscherraum 136 fallender Kondensatstrahl 178 aus, der nach Durchfallen einer Zerfallslänge in die Tropfen eines Kondensatsprays 180 zerfällt.

Der Zerfall eines Kondensatstrahls 178 mit rundem Querschnitt erfolgt nach einem der folgenden Zerfallsmechanismen: Rayleigh-Zerfall, Membran-Zerfall oder Fiber-Zerfall.

In Fig. 7 ist ein Rayleigh-Zerfall eines Kondensatstrahls 178 mit kurzer Zerfallslänge dargestellt. Beim Rayleigh-Zerfall entsteht aus dem Kondensatstrahl 178 eine monodisperse Tropfenkette, wobei der Durchmesser jeden Tropfens ungefähr das Doppelte des ursprünglichen Strahldurchmessers beträgt.

Der Rayleigh-Zerfall führt also zur Bildung eines monodispersen Kondensatsprays 180.

Um nach dem Durchströmen der vorstehend beschriebenen Düsenbohrungen 138a bis 138d einen Rayleigh-Zerfall zu erhalten, wird die Strömungsgeschwindigkeit des Kondensats durch die Düsenkanäle 146 mittels der Kondensatpumpe 80 so eingestellt, daß die Reynolds-Zahl der Kondensatströmung an den Mündungsöffnungen der Düsenkanäle 146 kleiner ist als ungefähr 5.000, vorzugsweise kleiner als ungefähr 2.500, und größer ist als ungefähr 100, vorzugsweise größer als ungefähr 500. Dabei ist die Reynolds-Zahl Re definiert als

$$Re = u \, D/\nu,$$

wobei u die Strömungsgeschwindigkeit des Kondensats an den Mündungsöffnungen der Düsenbohrungen 138, D den Durchmesser der Mündungsöffnungen der Düsenbohrungen 138 und $\nu$ die kinematische Viskosität des Kondensats bezeichnet. Die Strömungsgeschwindigkeit des Kondensats an den Mündungsöffnungen der Düsenbohrungen 138 entspricht dem Verhältnis aus dem Kondensat-Volumenstrom im Kondensatkreislauf 62 und der Gesamtfläche der Mündungsöffnungen aller Düsenbohrungen 138 der Düsenplatte 132.

Damit die durch den Rayleigh-Zerfall des Kondensatstrahls 178 entstandenen Kondensattropfen stabil bleiben und nicht ihrerseits weiter zerfallen, wird die Relativgeschwindigkeit zwischen den fallenden Tropfen

und der dieselbe umgebende Gasatmosphäre im Wärmetauscherraum 136 so eingestellt, daß die Weberzahl der Tropfen kleiner ist als 10, vorzugsweise kleiner als 5, insbesondere kleiner als 2. Dabei ist die Weberzahl We definiert als

$$We = u_r^2 \, d \, \rho/\sigma,$$

wobei $u_r$ die Relativgeschwindigkeit zwischen den Tropfen und der umgebenden Gasatmosphäre, d den Tropfendurchmesser (d ungefähr gleich 2D), $\rho$ die Kondensatdichte in den Tropfen und $\sigma$ die Oberflächenspannung des Kondensats bezeichnet.

Wird, wie in Fig. 2 dargestellt, der Abgasstrom in entgegengesetzter Richtung zum Kondensatstrom durch den Restwärmetauscher 44 geführt, so entspricht die Relativgeschwindigkeit $u_r$ der Summe aus der Fallgeschwindigkeit der Kondensattropfen und der Strömungsgeschwindigkeit des Abgases im Restwärmetauscher 44, wobei letztere umgekehrt proportional zur Querschnittsfläche des Wärmetauscherraums 136 und damit im wesentlichen durch die Dimensionierung des Restwärmetauschers 44 vorgegeben ist.

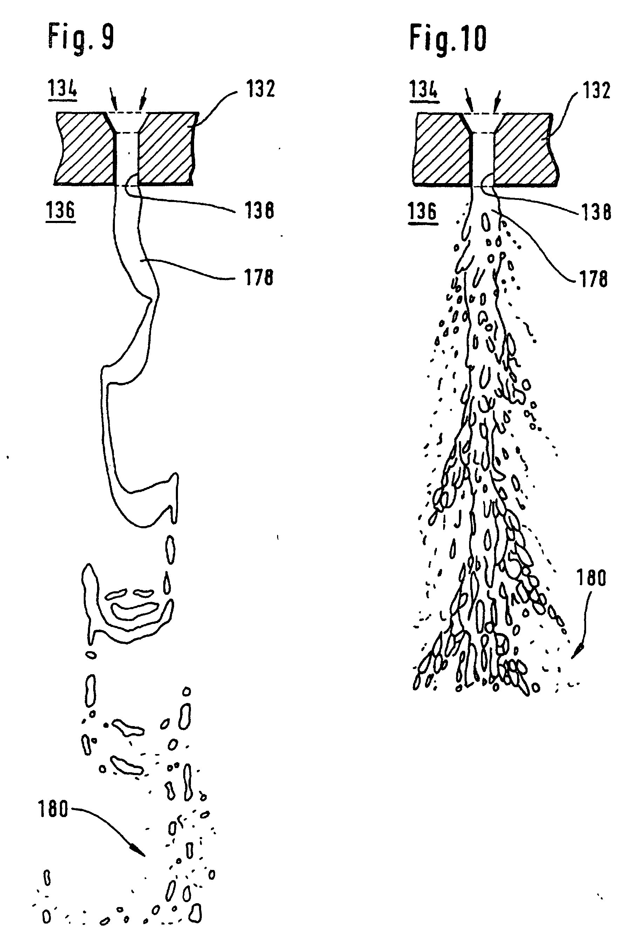

In Fig. 8 ist ebenfalls ein Rayleigh-Zerfall eines Kondensatstrahls 178 in ein monodisperses Kondensatspray 180 dargestellt, jedoch mit größerer Zerfallslänge als in Fig. 7.

Durch die größere Zerfallslänge ist zwar die Kondensatoberfläche im Wärmetauscherraum 136 reduziert, so daß zum Austausch einer vorgegebenen Wärmemenge zwischen dem Abgas und dem Kondensat ein höherer Wärmetauscherraum 136 benötigt wird; dafür sinkt aber, insbesondere im oberen Bereich des Wärmetauscherraums 136, wo der Abgasaustritt 52 angeordnet ist, die Gefahr, daß Kondensattröpfchen vom Abgasstrom mitgerissen und aus dem Restwärmetauscher 44 hinausgetragen werden.

In Fig. 9 ist ein unerwünschter Membran-Zerfall eines Kondensatstrahls 178 dargestellt.

Bei diesem Zerfallsmechanismus zerfällt der Kondensatstrahl 178 in ein Kondensatspray 180 mit sehr breitem Tropfengrößenspektrum. Ein breites Tropfengrößenspektrum ist von Nachteil, da es zum einen kleine Tröpfchen umfaßt, die vom Abgasstrom mitgerissen und aus dem Restwärmetauscher hinausgetragen werden, falls kein zusätzlicher nachgeschalteter Tropfenabscheider vorgesehen ist. Zum anderen umfaßt das Kondensatspray 180 mit breitem Tropfengrößenspektrum auch relativ große Tropfen oder Filamente, die nur eine geringe spezifische Oberfläche und damit eine kleine spezifische Wärmeaustauschfläche aufweisen.

Ferner wird beim Membran-Zerfallsmechanismus ein großer Anteil der kinetischen Energie der Kondensatströmung dissipiert, so daß eine höhere Pumpenleistung erforderlich ist.

Zum Membran-Zerfall des Kondensatstrahls 178 kann es kommen, wenn die Reynolds- oder die Weberzahl außerhalb des vorstehend genannten Bereiches liegen, oder bei ungünstiger Form der Düsenbohrungen 138, bei zu rauhen Bohrungswänden oder bei zu schwacher Haftung des Kondensats an den Wänden der Düsenbohrungen 138.

In Fig. 10 ist ein ebenfalls unerwünschter Fiber-Zerfall eines Kondensatstrahls 178 dargestellt.

Auch beim Fiber-Zerfall zerfällt der Kondensatstrahl 178 in ein Kondensatspray 180 mit breitem Tropfengrößenspektrum, das die bereits im Zusammenhang mit dem Membran-Zerfall genannten Nachteile aufweist und ebenfalls eine höhere Pumpenleistung erfordert.

Der Fiber-Zerfall kann ebenso wie der Membran-Zerfall dann auftreten, wenn der vorstehend genannte günstige Bereich der Reynolds- oder Weberzahlen verlassen wird oder die Düsenbohrungen 138 ungünstig geformt sind, die Wände der Düsenbohrungen 138 zu rauh sind oder das Kondensat zu schwach an den Wänden der Düsenbohrungen 138 haftet.

Das im Wärmetauscherraum 136 des Restwärmetauschers 44 gebildete monodisperse Kondensatspray bietet nicht nur eine große Wärmetauscherfläche für den Wärmeübergang von dem heißen Abgas aus dem Abgaszuführrohr 40 in das Kondensat, sondern auch eine hohe Wärmeübergangzahl aufgrund der Nutzung der latenten Wärme des im Abgas enthaltenen Wasserdampfs.

Unmittelbar nach Eintritt des heißen Abgases aus dem Abgaszuführrohr 40 durch den Abgaseintritt 42 in den knapp oberhalb des Kondensatsumpfes 150 liegenden Bereich des Wärmetauscherraums 136 kommt das Abgas mit den Tropfen des monodispersen Kondensatsprays 180 in Kontakt, verdampft dieses zumindest teilweise und wird dabei rasch abgekühlt. Dabei wandelt sich die fühlbare Abgaswärme in latente Wärme um.

Der durch partielle Verdampfung des Kondensatsprays 180 gebildete Wasserdampf strömt zusammen mit dem abgekühlten Abgas und dem darin bereits enthaltenen Wasserdampf gegen die Fallrichtung des Kondensatsprays 180 im Wärmetauscherraum 138 nach oben, wobei sich das Abgas weiter abkühlt, so daß im oberen, der Düsenplatte 132 benachbarten Bereich des Wärmetauscherraums 136 der im Abgas mitgeführte Wasserdampf an den Tropfen des Kondensatsprays 180 kondensiert, wobei der zirkulierende Kondensatmassenstrom die im Dampf enthaltene latente Wärme aufnimmt.

Die Menge des im oberen Bereich des Wärmetauscherraums 136 kondensierenden Wasserdampfes ist größer als die Menge des im unteren Bereich des Wärmetauscherraumes 136 verdampften Kondensats, so daß im Ergebnis der mit dem Abgas in den Restwärmetauscher 44 gelangte Wasserdampf zumindest teilweise kondensiert und dabei latente Wärme an den Kondensatmassenstrom im Kondensatkreislauf 62 abgibt.

Da das Kondensat demnach fühlbare und latente Wärme aus dem Abgasstrom aufnimmt, wirkt es als Wärmetauschmedium für das Abgas des Brenners 32.

Die im Kondensatsumpf 150 am Boden des Wärmetauscherraums 136 eintreffende Kondensatmenge ist geringfügig größer als die durch die Düsenplatte 132 in den Wärmetauscherraum 136 eintretende Kondensatmenge. Typischerweise entspricht die pro Zeiteinheit im Wärmetauscherraum 136 aus dem Abgas zusätzlich kondensierte Kondensatmenge ungefähr einem Tausendstel bis zu einem Hundertstel der pro Zeiteinheit in den Wärmetauscherraum 136 durch die Düsenplatte 132 eintretenden Kondensatmenge, deren Masse wiederum vorzugsweise das ungefähr 10- bis 100-fache der Masse des pro Zeiteinheit in den Wärmetauscherraum 136 eintretenden Abgases beträgt.

Die durchschnittliche Tropfengröße des monodispersen Kondensatsprays 180 ist in Abhängigkeit von der Strömungsgeschwindigkeit des Abgases im Wärmetauscherraum 136 so gewählt, daß die Tropfen nicht durch den Abgasstrom aus dem Wärmetauscherraum 136 durch den Abgasaustritt 52 mitgerissen werden.

Das Abgas wird im Restwärmetauscher 44 nicht nur abgekühlt und getrocknet, sondern auch gereinigt, da im Abgas mitgeführte Schadstoffe im Kondensatstrom gelöst werden. Insbesondere wird bei Verwendung schwefelhaltiger Brennstoffe im Brenner 32 entstehendes $SO_2$ so aus dem Abgas ausgewaschen.

Das im Restwärmetauscher 44 abgekühlte Abgas gelangt durch das Abgasabführrohr 56 zum Temperaturwechsler 38, wo es durch die in der Durchleitstellung befindliche Umlenkplatte 60 in das Schornsteinzuführrohr 58 umgelenkt wird, so daß es schließlich durch den (nicht dargestellten) Schornstein in die Atmosphäre entweichen kann.

Im Temperaturwechsler 38 findet ein mäßiger Wärmeübergang von dem durch die Abgasleitung 36 eintretenden heißen Abgasstrom zu dem durch das Abgasabführrohr 56 eintretenden abgekühlten Abgasstrom statt, aufgrund dessen das abgekühlte Abgas über seinen Taupunkt hinaus erwärmt wird, also bei Austritt aus dem Temperaturwechsler 38 in das Schornsteinzuführrohr 58 trocken ("überhitzt") ist, so daß im Schornstein keine Kondensation stattfindet, die zu einer Korrosion des Schornsteins führen könnte.

Die Tropfen des Kondensatsprays 180 gelangen nach Durchfallen des Wärmetauscherraums 136 in den Kondensatsumpf 150.

Aus dem Kondensatsumpf 150 gelangt das im Kondensatkreislauf 62 umlaufende Kondensat zunächst in den Neutralisator 66, in dem durch Zugabe von Neutralisationsmitteln (beispielsweise Hydrolit) ein pH-Wert des Kondensats zwischen ungefähr 6 und ungefähr 7 eingestellt wird.

Dies ist insbesondere bei der Verwendung von schwefelhaltigen Brennstoffen im Brenner 32 von Vorteil, da das heiße Abgas in diesem Fall $SO_2$ enthält, das sich im Kondensat löst und dieses sauer und äußerst korrosiv macht. Saures Kondensat würde den Restwärmetauscher 44 und die übrigen Bestandteile des Kondensatkreislaufs 62 korrodieren und überdies von metallischen Spurenelementen herrührende Metalloxidkomponenten aus dem Abgas lösen, was zu einer hohen Metallkonzentration im Kondensat und zu einer Zerstörung des Restwärmetauschers 44 führen könnte.

Das neutralisierte Kondensat wird im Kondensatfilter 70 gefiltert und gelangt in den Luftinjektor 74, wo ihm durch die Luftzuführleitung 76 ein Luftstrom zugeführt wird, durch den gegebenenfalls im Kondensat gelöste Sulfit-Ionen zu ungiftigen Sulfat-Ionen oxidiert werden.

Vom Luftinjektor 74 gelangt das Kondensat in die Kondensatpumpe 80, die den Kondensatumlauf im Kondensatkreislauf 62 aufrechterhält, und weiter durch die Leitung 82 zum oberen Kondensateintritt 54.

Wie bereits oben erwähnt, sammelt sich im Kondensatsumpf 150 Kondensat an. Das Heizwasser im Heizwasserrücklauf 105 wird durch den Kondensatsumpf 150 geführt. Das im Kondensatkreislauf 62 erwärmte Wärmetauschmedium kann dadurch Wärme an das Heizwasser im Heizwasserrücklauf 105 abgeben.

Da bevorzugterweise das Volumen 155 der Kondensatmenge im Kondensatsumpf 150 größer ist als das heizwasseraufnehmende Volumen 35 des Heizwasserkessels 34, kann das Kondensat auch dann Wärme an das Heizwasser abgeben, wenn der Brenner 32 nicht betätigt ist.

Durch die große Wärmekapazität der Kondensatmenge im Kondensatsumpf 150 ist also auch während einer Nichtbetriebsphase des Brenners 32 eine Wärmeentnahme aus dem Kondensat möglich.

Gleichzeitig wird durch die Überführung von Wärme von dem Kondensat an das Heizwasser das Kondensat abgekühlt. Dadurch ist eine tiefere Temperatur für das Kondensat und damit eine bessere Ausnutzung der Restwärme ermöglicht.

Die Temperatur im Kondensat wird durch einen Temperaturfühler (in der Fig. nicht gezeigt) überwacht. Bei nur geringem Heizleistungsbedarf durch die Heizkörperanordnung 100 kann das im Heizwasserrücklauf 105 durch den Kondensatsumpf 150 des Restwärmetauschers 44 geführte Heizwasser keine oder nur wenig Wärme aufnehmen. Unter Umständen kann sogar der Fall vorliegen, daß das Kondensat durch das Heizwasser aufgewärmt wird. In diesem Falle veranlaßt eine Steuereinheit (in der Fig. nicht gezeigt), daß die Umlenkplatte 60 in ihre Sperrstellung gebracht wird, so daß das Abgas direkt, unter Umgehung des Restwärmetauschers 44, in das Schornsteinzuführrohr 58 gelangt.

Zur optimalen Nutzung der Restwärme des Abgases bei verhältnismäßig hohen Außentemperaturen, d.h. bei geringem Heizbedarf, besteht auch die Möglichkeit, Heizwasser aus dem Heizwasserrücklauf 105 über die Abzweigung 108 durch die Leitung 110 über einen Mischer 92 dem Heizwasservorlauf zuzuführen. Die Menge des zugeführten Heizwassers wird dabei so geregelt, daß das Kondensat noch Wärme an das Heizwasser im Heizwasserrücklauf 105 abgeben kann.

Es kann auch die Zubereitung von Warmbrauchwasser in die Vorrichtung 30 mit einbezogen werden. Dazu wird kaltes Brauchwasser, welches beispielsweise aus einem öffentlichen Versorgungsnetz stammt, über die Brauchwasserzuführung 154 und der Wärmetauscherschlange 156 durch den Kondensatsumpf 150 des Restwärmetauschers 44 geführt. Dadurch wird das Brauchwasser aufgewärmt und dieses vorgewärmte Brauchwasser wird beim Durchlaufen des Heizwasser-Brauchwasser-Durchlauferhitzers 118 auf seine gewünschte Temperatur aufgewärmt. Es kann jedoch auch vorgesehen sein, daß kein Brauchwasser dem Restwärmetauscher 44 zur Vorwärmung zugeführt wird.

Bei Entnahme von warmem Brauchwasser über die Leitung 220 kann dabei der Brenner 32 so gesteuert sein, daß er, falls kein Heizungsbetrieb vorliegt, dann eingeschaltet wird, sobald warmes Brauchwasser entnommen wird oder erst dann, wenn für eine bestimmte Mindestzeit Warmwasser entnommen wurde.

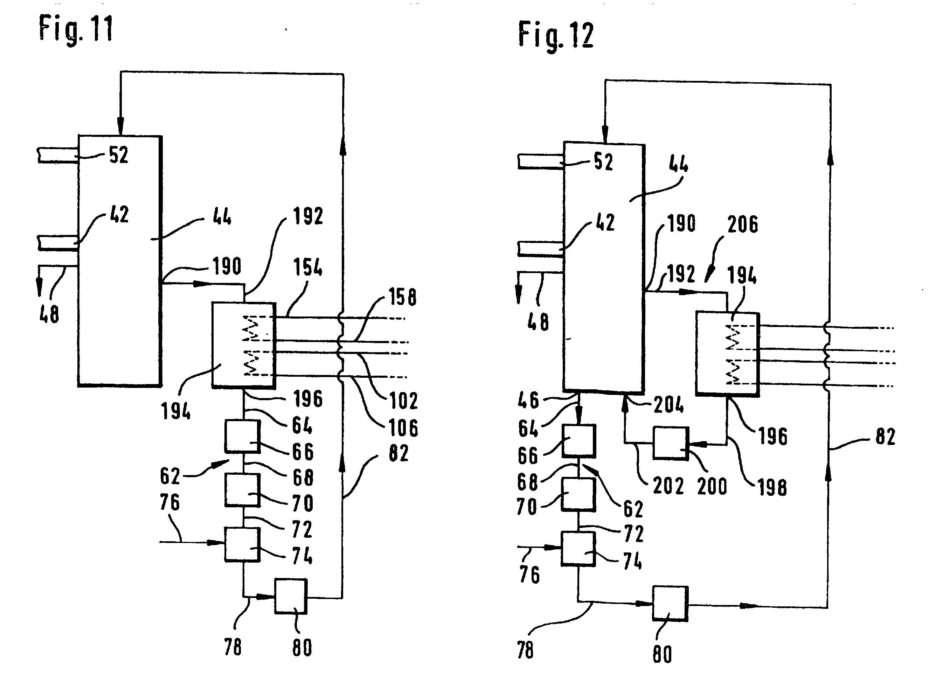

In einer zweiten Variante eines Ausführungsbeispiels (Fig. 11) erfolgt der Wärmeaustausch zwischen dem Kondensat und dem Heizwasser in einem Wärmetauschmedium-Heizwasser-Wärmetauscher 194.

Dazu weist der Restwärmetauscher 44 einen Austritt 190 auf, welcher an einer Seitenwand des Restwärmetauschers 44 im Bereich des Kondensatsumpfs 150 liegt. Durch eine Leitung 192 wird Kondensat einem Wärmetauschmedium-Heizwasser-Wärmetauscher 194 zugeführt. Dieser nimmt Kondensat in einem Volumen auf, das bevorzugterweise fünffach größer ist als das heizwasseraufnehmende Volumen 35 des Heizwasserkessels 34.

Durch einen Austritt 196 des Wärmetauschmedium-Heizwasser-Wärmetauschers 194 wird das Kondensat durch die Leitung 64 dem Neutralisator 66 zugeführt. Der Kondensatkreislauf 62 ist ansonsten so angeordnet, wie bereits oben geschildert.

Weiter besteht die Möglichkeit, Brauchwasser zur Vorwärmung mittels der Brauchwasserzuführung 154 und der Brauchwasserleitung 158 durch den Wärmetauschmedium-Heizwasser-Wärmetauscher 194 zu führen.

Diese Vorrichtung hat den Vorteil, daß auf die Eintritte 50 und die Austritte 51 sowie den Austritt 46 am Restwärmetauscher 44 verzichtet werden kann.

Das Verfahren zur Erwärmung des Heizwassers bzw. des Brauchwassers ist das gleiche wie bereits oben geschildert.

Alternativ kann auch vorgesehen sein, daß ein Durchlauferhitzer und ein Wärmetauschmedium-Heizwasser-Wärmetauscher vorhanden ist.

In einer dritten Variante eines Ausführungsbeispieles (Fig. 12) wird das Kondensat durch den Wärmetauschmedium-Heizwasser-Wärmetauscher 194 in einem Restwärmetauscher-Kondensatkreislauf 206 geführt. Dazu weist der Restwärmetauscher 44 einen Eintritt 204 an einer Seitenwand im Bereich des Kondensatsumpfes 150 auf, durch den durch den Wärmetauschmedium-Heizwasser-Wärmetauscher 194 befördertes Kondensat wieder in den Kondensatsumpf 150 eintreten kann. Eine Leitung 198 verbindet den Kondensataustritt 196 des Wärmetauschmedium-Heizwasser-Wärmetauschers 194 mit einem Eingang einer Pumpe 200. Eine Leitung 202 verbindet eine Ausgangsseite der Pumpe mit dem Eintritt 204.

Durch die kontinuierlich arbeitende Pumpe 200 wird das Kondensat aus dem Wärmetauschmedium-Heizwasser-Wärmetauscher 194 befördert. Weiterhin wird das Wärmetauschmedium in dem Kondensatkreislauf 62 befördert.

Es kann auch vorgesehen sein, daß das Kondensat aus dem Kondensatsumpf 150 dem Wärmetauschmedium-Heizwasser-Wärmetauscher 194 mittels Konvektion zuströmen kann. Dazu ist es vorteilhaft, daß der Austritt 196 auf einem höheren Gravitationspotential angeordnet ist als der Eintritt 204 in den Restwärmetauscher 44.

Die Leitung 202 kann auch (in der Fig. 12 nicht gezeigt) direkt in den Kondensatkreislauf 62 führen. Dadurch lassen sich größere Unterschiede im Gravitationspotential erzeugen.

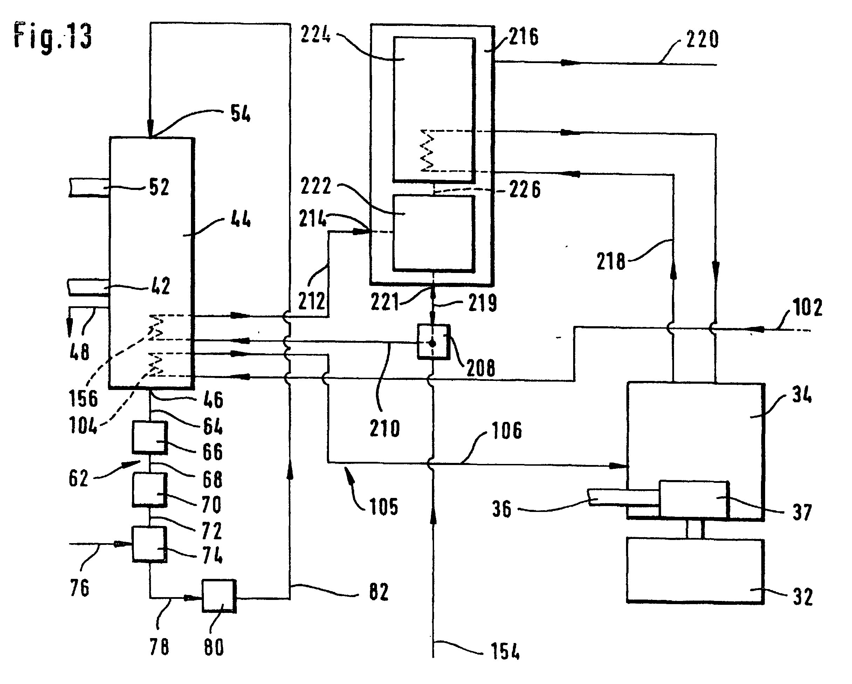

In einer vierten Variante eines Ausführungsbeispieles (Fig. 13) ist die Brauchwasserzuführung 154 mit einem Eingang eines Dreiwegemischers 208 verbunden. Dieser Dreiwegemischer 208 kann insbesondere auch als Dreiwegeventil, beispielsweise als Dreiwegerückschlagventil, ausgeführt sein. Eine Leitung 210 führt von einem ersten Ausgang des Dreiwegemischers 208 zu dem Restwärmetauscher 44, wobei das Brauchwasser mittels der Wärmetauschereinheit 156, beispielsweise einer Wärmetauscherschlange, durch den Kondensatsumpf 150 des Restwärmetauschers geführt wird. Von der Wärmetauschereinheit 156 verläuft eine Leitung 212 zu einem Eintritt 214 eines Warmbrauchwasserspeichers 216. Der Warmbrauchwasserspeicher 216 ist über eine Leitung 219 mit einem zweiten Ausgang des Dreiwegemischers 208 verbunden.

Zur Erwärmung von Brauchwasser im Warmbraucherwasserspeicher 216 wird im Heizwasserkessel 34 erwärmtes Heizwasser durch eine Leitung 218 durch den Warmbrauchwasserspeicher 216 geführt. Von der Heizkörperanordnung 100 (in Fig. 13 nicht gezeigt) führt der Heizwasserrücklauf 105 zum Restwärmetauscher 44 bzw. zum Wärmetauschmedium-Heizwasser-Wärmetauscher 194. Diese Anordnung ist wie oben beschrieben.

Über die Leitung 212 wird dem Warmbrauchwasserspeicher 216 im Kondensatsumpf 150 des Restwärmetauschers 44 bzw. im Wärmetauschmedium-Heizwasser-Wärmetauscher 194 vorgewärmtes Brauchwasser zugeführt.

Wird aus dem Warmbrauchwasserspeicher 216 über eine Leitung 220 kein Brauchwasser entnommen, dann weist der Dreiwegemischer 208 eine solche Stellung auf, daß der Fluß von kaltem Brauchwasser aus der Leitung 154 in die Leitungen 210 und 219 gesperrt ist. Dagegen ist der Durchgang von der Leitung 219 auf die Leitung 210 geöffnet. Dadurch kann über die Leitung 219 aus dem Warmbrauchwasserspeicher 216 Brauchwasser mittels der Leitung 210 zur Erwärmung durch das Wärmetauschmedium dem Restwärmetauscher 44 bzw. dem Wärmetauschmedium-Heizwasser-Wärmetauscher 194 zuströmen und von dort strömt dann das vorgewärmte Brauchwasser in den Warmbrauchwasserspeicher 216.

Vorzugsweise ist ein Austritt 221 für die Leitung 219 aus dem Warmbrauchwasserspeicher 216 so angeordnet, daß kühles Brauchwasser mittels Schwerkraft in die Leitung 210 strömen kann und daß vorgewärmtes Brauchwasser durch die Leitung 212 mittels Konvektion dem Warmbrauchwasserspeicher 216 zuströmen kann.

Bei der Entnahme von warmem Brauchwasser aus dem Warmbrauchwasserspeicher 216 ist durch den Dreiwegemischer 208 der Durchgang von der Leitung 219 auf die Leitung 210 gesperrt.

Der Warmbrauchwasserspeicher 216 kann in einer zweiteiligen Form ausgebildet sein, welche einen ersten Speicher 222 umfaßt, an dem der Eintritt 214 und der Austritt 221 angeordnet sind, sowie einen zweiten Speicher 224, in dem das Brauchwasser mittels des in der Leitung 218 geführten Heizwassers erwärmt wird. Dem zweiten Speicher 224 wird durch eine Leitung 226 vom ersten Speicher 222 im Restwärmetauscher 44 bzw. im Wärmetauschmedium-Heizwasser-Wärmetauscher 194 vorgewärmtes Heizwasser zugeführt. Der erste Speicher 222 wirkt demnach als Puffer zwischen der Leitung 154 für kaltes Brauchwasser und dem zweiten Speicher 224.

Alternativ dazu kann ein Warmbrauchwasserspeicher 216 so ausgebildet sein, daß der erste Speicher 222 und der zweite Speicher 224 miteinander verbunden sind und die Verbindung aus einer perforierten Scheibe (in der Fig. nicht gezeigt) gebildet ist, so daß Brauchwasser aus dem ersten Speicher 222 direkt in den zweiten Speicher 224 strömen kann. Dies hat den Vorteil, daß keine Wärmeverluste durch Transport von vorgewärmtem Brauchwasser vom ersten Speicher 222 zum zweiten Speicher 224 entstehen.

In dem Warmbrauchwasserspeicher 216 kann ein erster Speicher 222 und ein zweiter Speicher 224 auch derart ausgebildet sein, daß das Heizwasser über die Leitung 218 durch eine Wärmetauschereinheit, beispielsweise eine Plattenwärmetauschereinheit, durchgeführt wird, wobei die Wärmetauschereinheit in einem mittleren Bereich des Warmbrauchwasserspeichers 216 angeordnet ist. Die Wärmetauschereinheit ist dabei so angeordnet und weist eine solche Form auf, daß durch den Bereich oberhalb der Wärmetauschereinheit der zweite Speicher 224 gebildet ist und durch den Bereich unterhalb der Wärmetauschereinheit der erste Speicher 222 gebildet ist.

Üblicherweise ist das Volumen des zweiten Speichers 224 ungefähr doppelt bis ungefähr zehnfach so groß wie das Volumen des ersten Speichers 222.

Der Brenner 32 wird bei Entnahme von warmen Brauchwasser durch die Leitung 220 eingeschaltet, wenn die Temperatur im Warmbrauchwasserspeicher 216 und insbesondere im zweiten Speicher 224 eine bestimmte Temperatur unterschreitet oder wenn für länger als eine bestimmte Mindestzeit warmes Brauchwasser entnommen wird. Es kann auch vorgesehen sein, daß der Brenner 32 betätigt wird, wenn eine oder mehrere bestimmte Wasserentnahmestellen betätigt werden wie beispielsweise ein Wasserhahn für eine Badewanne. Es ist auch möglich, daß der Brenner 32 zur Warmwasseraufbereitung nur dann betätigt wird, wenn von dem Benutzer ein besonderer Schalter betätigt wird.

## Patentansprüche

1. Verfahren zur Nutzung der die restliche fühlbare und die latente Wärme umfassenden Restwärme eines Abgases einer Feuerungsanlage, insbesondere wenn ein Brenner nur zeitweise betätigt wird, bei dem das Abgas in einem Restwärmetauscher Wärme an ein Wärmetauschmedium abgibt und aus dem Wärmetauschmedium Wärme an Heizwasser in einem Heizwasserkreislauf, welcher einen Heizwasserkessel umfaßt, überführt wird, **dadurch gekennzeichnet, daß** die Überführung von Wärme an das Heizwasser aus einer Wärmetauschmediummenge erfolgt, deren Volumen größer ist als das ungefähr Dreifache eines heizwasseraufnehmenden Volumens des Heizwasserkessels.

2. Verfahren nach Anspruch 1, **dadurch gekennzeichnet, daß** das Volumen der Wärmetauschmediummenge, durch welche Wärme an das Heizwasser überführt wird, ungefähr fünffach größer ist als das heizwasseraufnehmende Volumen des Heizwasserkessels.

3. Verfahren nach einem der vorangehenden Ansprüche, **dadurch gekennzeichnet, daß** die Wärme an Heizwasser in einem Heizwasserrücklauf überführt wird.

4. Verfahren nach einem der vorangehenden Ansprüche, **dadurch gekennzeichnet, daß** direkt aus im Restwärmetauscher erwärmtem Wärmetauschmediumkondensat Wärme an das Heizwasser überführt wird.

**5.** Verfahren nach einem der vorangehenden Ansprüche, **dadurch gekennzeichnet, daß** das Heizwasser zur Wärmeaufnahme durch einen Kondensatsumpf des Restwärmetauschers geführt wird.

**6.** Verfahren nach einem der Ansprüche 1 bis 4, **dadurch gekennzeichnet, daß** Heizwasser zur Wärmeaufnahme durch einen Wärmetauschmedium-Heizwasser-Wärmetauscher geführt wird, welcher direkt aus dem Restwärmetauscher kommendes erwärmtes Wärmetauschmedium aufnimmt.

**7.** Verfahren nach einem der vorangehenden Ansprüche, **dadurch gekennzeichnet, daß** das Wärmetauschmedium in einem Kondensatkreislauf befördert wird.

**8.** Verfahren nach Anspruch 7, **dadurch gekennzeichnet, daß** die Beförderung des Wärmetauschmediums in dem Kondensatkreislauf an die Betätigung des Brenners gekoppelt ist.

**9.** Verfahren nach Anspruch 6 und einem der Ansprüche 7 oder 8, **dadurch gekennzeichnet, daß** das Wärmetauschmedium in einem Restwärmetauscher-Kondensatkreislauf geführt ist, welcher den Wärmetauschmedium-Heizwasser-Wärmetauscher umfaßt, und in welchem das Wärmetauschmedium Wärme an das Heizwasser abgibt.

**10.** Verfahren nach Anspruch 9, **dadurch gekennzeichnet, daß** das Wärmetauschmedium im Restwärmetauscher-Kondensatkreislauf durch eine Pumpe kontinuierlich befördert wird.

**11.** Verfahren nach Anspruch 10, **dadurch gekennzeichnet, daß** das Wärmetauschmedium im Restwärmetauscher-Kondensatkreislauf mittels Konvektion bzw. Schwerkraft befördert wird.

**12.** Verfahren nach einem der vorangehenden Ansprüche, **dadurch gekennzeichnet, daß** Brauchwasser durch den Kondensatsumpf des Restwärmetauschers zur Aufnahme von Wärme aus dem Wärmetauschmedium geführt wird.

**13.** Verfahren nach einem der Ansprüche 1 bis 11, **dadurch gekennzeichnet, daß** Brauchwasser durch den Wärmetauschmedium-Heizwasser-Wärmetauscher zur Aufnahme von Wärme aus dem Wärmetauschmedium geführt wird.

**14.** Verfahren nach Anspruch 12 oder 13, **dadurch gekennzeichnet, daß** durch Wärmetauschmedium vorgewärmtes Brauchwasser einem Brauchwasser-Heizwasser-Wärmetauscher zugeführt wird.

**15.** Verfahren nach einem der Ansprüche 12 bis 14, **da-**

**durch gekennzeichnet, daß** durch Wärmetauschmedium vorgewärmtes Brauchwasser einem Warmbrauchwasserspeicher zugeführt wird, welcher von Heizwasser zur Erwärmung des Brauchwassers durchströmt ist.

**16.** Verfahren nach Anspruch 15, **dadurch gekennzeichnet, daß** durch Wärmetauschmedium vorgewärmtes Brauchwasser dem Warmbrauchwasserspeicher mittels Konvektion zuströmt und eine entsprechende Menge an Brauchwasser vom Warmbrauchwasserspeicher zum Restwärmetauscher mittels Schwerkraft strömt.

**17.** Vorrichtung zur Nutzung der die restliche fühlbare und die latente Wärme umfassenden Restwärme eines Abgases einer Feuerungsanlage, insbesondere wenn ein Brenner (32) nur zeitweise betätigt wird, welche einen Restwärmetauscher (44) umfaßt, durch den Wärme von dem Abgas an ein Wärmetauschmedium abgegeben wird, **dadurch gekennzeichnet, daß** die Vorrichtung eine Einrichtung zur Übertragung von Wärme von dem Wärmetauschmedium auf Heizwasser umfaßt, deren wärmetauschmedium-aufnehmendes Volumen mindestens dreifach größer ist als ein heizwasseraufnehmendes Volumen (35) eines Heizwasserkessels (34), und daß die Einrichtung in einem Heizwasserrücklauf (105) eines Heizwasserkreislaufes (84) angeordnet ist.

**18.** Vorrichtung nach Anspruch 17, **dadurch gekennzeichnet, daß** das wärmetauschmedium-aufnehmende Volumen der Einrichtung zur Übertragung von Wärme ungefähr fünffach größer ist als das heizwasseraufnehmende Volumen (35) des Heizwasserkessels (34).

**19.** Vorrichtung nach Anspruch 17 oder 18, **dadurch gekennzeichnet, daß** die Einrichtung zur Übertragung von Wärme dadurch gebildet ist, daß der Heizwasserrücklauf (105) mittels einer Wärmetauscherschlange (104) durch einen Kondensatsumpf (150) des Restwärmetauschers (44) geführt ist.

**20.** Vorrichtung nach einem der Ansprüche 16 bis 18, **dadurch gekennzeichnet, daß** die Einrichtung zur Übertragung von Wärme durch einen Wärmetauschmedium-Heizwasser-Wärmetauscher (194) gebildet ist, welcher direkt aus dem Restwärmetauscher (44) kommendes erwärmtes Wärmetauschmedium aufnimmt und durch welchen der Heizwasserrücklauf (105) geführt ist.

**21.** Vorrichtung nach Anspruch 20, **dadurch gekennzeichnet, daß** die Vorrichtung einen Restwärmetauscher-Kondensatkreislauf (206) umfaßt, durch welchen Kondensat aus dem Kondensatsumpf (150) durch den Wärmetauschmedium-Heizwasser-Wärmetauscher (194) strömt.

22. Vorrichtung nach Anspruch 21, **dadurch gekennzeichnet, daß** die Strömung des Kondensats durch eine Pumpe (200) bewirkt wird.

23. Vorrichtung nach Anspruch 22, **dadurch gekennzeichnet, daß** der Wärmetauschmedium-Heizwasser-Wärmetauscher (194) bezüglich dem Restwärmetauscher (44) und einem Wärmetauschmedium-Kreislauf (62) so angeordnet ist, daß Kondensat aus dem Kondensatsumpf (150) des Restwärmetauschers (44) mittels Konvektion/Schwerkraft durch den Wärmetauschmedium-Heizwasser-Wärmetauscher (194) strömen kann.

24. Vorrichtung nach einem der Ansprüche 17 bis 23, **dadurch gekennzeichnet, daß** der Wärmetauschmedium-Kreislauf (62) eine Pumpe (80) aufweist, welche durch eine Steuereinheit gesteuert ist, die eine Betätigung oder Nichtbetätigung des Brenners (32) registrieren kann.

25. Vorrichtung nach einem der Ansprüche 17 bis 24, **dadurch gekennzeichnet, daß** Brauchwasser mittels einer Wärmetauschereinheit (156) durch die Einrichtung zur Übertragung von Wärme geführt ist, wodurch Wärme vom Wärmetauschmedium auf Brauchwasser überführbar ist.

26. Vorrichtung nach Anspruch 25, **dadurch gekennzeichnet, daß** Brauchwasser durch den Kondensatsumpf (150) des Restwärmetauschers (44) geführt ist.

27. Vorrichtung nach Anspruch 26, **dadurch gekennzeichnet, daß** das Brauchwasser durch den Wärmetauschmedium-Heizwasser-Wärmetauscher (194) zur Aufnahme von Wärme aus dem Wärmetauschmedium geführt ist.

28. Vorrichtung nach einem der Ansprüche 25 bis 26, **dadurch gekennzeichnet, daß** durch Wärmetauschmedium vorgewärmtes Brauchwasser einem Heizwasser-Brauchwasser-Durchlauferhitzer (118) zugeführt wird.

29. Vorrichtung nach einem der Ansprüche 25 bis 26, **dadurch gekennzeichnet, daß** die Vorrichtung einen Warmbrauchwasserspeicher (216) umfaßt, welchem durch Wärmetauschmedium vorgewärmtes Brauchwasser zugeführt wird.

30. Vorrichtung nach Anspruch 29, **dadurch gekennzeichnet, daß** eine Brauchwasserzuführung (210) zu der Einheit zur Übertragung von Wärme mittels eines Dreiwegemischers (208) mit einer Zuleitung für kaltes Brauchwasser (154) und mit dem Warmbrauchwasserspeicher (216) verbunden ist.

31. Vorrichtung nach Anspruch 30, **dadurch gekennzeichnet, daß** der Warmbrauchwasserspeicher (216) und ein Austritt (221) für eine Leitung (219) zwischen dem Warmbrauchwasserspeicher (216) und dem Dreiwegemischer (208) am Warmbrauchwasserspeicher (216) so angeordnet ist, daß Brauchwasser mittels Schwerkraft aus dem Warmbrauchwasserspeicher (216) über den Dreiwegemischer (208) in die Brauchwasserzuführung (210) strömen kann.

32. Vorrichtung nach Anspruch 31, **dadurch gekennzeichnet, daß** am Warmbrauchwasserspeicher (224) ein Eintritt (214) einer Zuführungsleitung (212) für Brauchwasser von der Einheit zur Übertragung von Wärme so angeordnet ist, daß erwärmtes Brauchwasser mittels Konvektion dem Warmbrauchwasserspeicher (216) zuströmen kann.

33. Vorrichtung nach Anspruch 32, **dadurch gekennzeichnet, daß** der Querschnitt der Brauchwasserzuführung (210) zwischen dem Dreiwegemischer (208) und der Einheit zur Übertragung von Wärme mindestens so groß und höchstens fünfzehnfach so groß ist wie der Querschnitt der Leitung (219) zwischen dem Warmbrauchwasserspeicher (216) und dem Mischer (208).

34. Vorrichtung nach Anspruch 32 oder 33, **dadurch gekennzeichnet, daß** der Querschnitt der Brauchwasserzuführung (210) zwischen dem Dreiwegemischer (208) und der Einheit zur Übertragung von Wärme mindestens dreifach so groß und höchstens zehnfach so groß ist wie der Querschnitt der Leitung (219) zwischen dem Warmbrauchwasserspeicher (216) und dem Dreiwegemischer (208).

35. Vorrichtung nach einem der Ansprüche 30 bis 34, **dadurch gekennzeichnet, daß** der Warmbrauchwasserspeicher (216) durch einen ersten Speicher (222) und einen zweiten Speicher (224) gebildet ist, wobei das Brauchwasser in dem zweiten Speicher (224) durch Heizwasser erwärmt wird, und dem zweiten Speicher (224) aus dem ersten Speicher (222) vorgewärmtes Brauchwasser zuführbar ist und daß der Eintritt (214) für Brauchwasser aus der Einheit zur Übertragung von Wärme und der Austritt (221) zum Dreiwegemischer (208) an dem ersten Speicher (222) angeordnet sind.

36. Vorrichtung nach Anspruch 35, **dadurch gekennzeichnet, daß** der erste Speicher (222) und der zweite Speicher (224) durch eine Leitung (226) verbunden sind.

**37.** Vorrichtung nach Anspruch 35, **dadurch gekennzeichnet, daß** der erste Speicher (222) und der zweite Speicher (224) durch eine Platte, welche Öffnungen aufweist die den Durchtritt von Wasser vom ersten Speicher (222) in den zweiten Speicher (224) erlaubt, verbunden sind.

**38.** Vorrichtung nach Anspruch 35, **dadurch gekennzeichnet, daß** eine Wärmetauschereinheit für Heizwasser so angeordnet ist und solch eine Form aufweist, daß sie den ersten Speicher (222) von dem zweiten Speicher (224) trennt und den Durchtritt von Wasser aus dem ersten Speicher (222) in den zweiten Speicher (224) erlaubt.

**39.** Vorrichtung nach einem der Ansprüche 17 bis 37, **dadurch gekennzeichnet, daß** im Restwärmetauscher (44) ein Temperaturfühler angeordnet ist, durch welchen die Temperatur des Kondensats überwachbar ist.

**40.** Vorrichtung nach einem der Ansprüche 17 bis 38, **dadurch gekennzeichnet, daß** ein Heizwasservorlauf (83) einen Mischer (92) aufweist, durch welchen Heizwasser aus dem Heizwasserrücklauf (105) in einen Heizungsvorlauf (85) leitbar ist.

**Claims**

**1.** Method of utilizing the residual heat, comprising the residual sensible heat and the latent heat, of a waste gas of a firing system, particularly when a burner is actuated only intermittently, wherein the waste gas in a residual heat exchanger gives off heat to a heat exchange medium and heat is transferred from the heat exchange medium to heating water in a heating-water circuit, which comprises a heating-water boiler, **characterized in that** the transfer of heat to the heating water is effected from a heat exchange medium quantity, the volume of which is approximately three times greater than a heating-water receiving volume of the heating-water boiler.

**2.** Method according to claim 1, **characterized in that** the volume of the heat exchange medium quantity, by means of which heat is transferred to the heating water, is approximately five times greater than the heating-water receiving volume of the heating-water boiler.

**3.** Method according to one of the preceding claims, **characterized in that** the heat is transferred to heating water in a heating-water return.

**4.** Method according to one of the preceding claims, **characterized in that** heat is transferred to the heating water directly from heat exchange medium condensate heated in the residual heat exchanger.

**5.** Method according to one of the preceding claims, **characterized in that** the heating water is conveyed for heat absorption through a condensate sump of the residual heat exchanger.

**6.** Method according to one of claims 1 to 4, **characterized in that** heating water is conveyed for heat absorption through a heat exchange medium / heating-water heat exchanger, which receives heated heat exchange medium coming directly from the residual heat exchanger.

**7.** Method according to one of the preceding claims, **characterized in that** the heat exchange medium is conveyed in a condensate circuit.

**8.** Method according to claim 7, **characterized in that** conveying of the heat exchange medium in the condensate circuit is linked to actuation of the burner.

**9.** Method according to claim 6 and one of claims 7 or 8, **characterized in that** the heat exchange medium is conveyed in a residual heat exchanger / condensate circuit, which comprises the heat exchange medium / heating-water heat exchanger, and in which the heat exchange medium gives up heat to the heating water.

**10.** Method according to claim 9, **characterized in that** the heat exchange medium is conveyed continuously in the residual heat exchanger / condensate circuit by means of a pump.

**11.** Method according to claim 10, **characterized in that** the heat exchange medium is conveyed in the residual heat exchanger / condensate circuit by means of convection and/or gravitational force.

**12.** Method according to one of the preceding claims, **characterized in that** service water is conveyed through the condensate sump of the residual heat exchanger in order to absorb heat from the heat exchange medium.

**13.** Method according to one of claims 1 to 11, **characterized in that** service water is conveyed through the heat exchange medium / heating-water heat exchanger in order to absorb heat from the heat exchange medium.

**14.** Method according to claim 12 or 13, **characterized in that** service water preheated by heat exchange medium is supplied to a service-water / heating-water heat exchanger.

**15.** Method according to one of claims 12 to 14, **characterized in that** service water preheated by heat exchange medium is supplied to a warm service-water storage tank, through which heating water flows in order to heat the service water.

**16.** Method according to claim 15, **characterized in that** service water preheated by heat exchange medium flows by means of convection to the warm service-water storage tank and a corresponding quantity of service water flows by means of gravitational force from the warm service-water storage tank to the residual heat exchanger.

**17.** Apparatus for utilizing the residual heat, comprising the residual sensible and the latent heat, of a waste gas of a firing system, particularly when a burner (32) is actuated only intermittently, comprising a residual heat exchanger (44), by means of which heat is given off by the waste gas to a heat exchange medium, **characterized in that** the apparatus comprises a device for transferring heat from the heat exchange medium to heating water, the heat exchange medium-receiving volume of which device is at least three times greater than a heating-water-receiving volume (35) of a heating-water boiler (34), and that the device is disposed in a heating-water return (105) of a heating-water circuit (84).

**18.** Apparatus according to claim 17, **characterized in that** the heat exchange medium-receiving volume of the heat transfer device is approximately five times greater than the heating-water-receiving volume (35) of the heating-water boiler (34).

**19.** Apparatus according to claim 17 or 18, **characterized in that** the heat transfer device is formed **in that** the heating-water return (105) is run by means of a heat exchanger coil (104) through a condensate sump (150) of the residual heat exchanger (44).

**20.** Apparatus according to one of claims 16 to 18, **characterized in that** the heat transfer device is formed by a heat exchange medium / heating-water heat exchanger (194), which receives heated heat exchange medium coming directly from the residual heat exchanger (44) and through which the heating-water return (105) runs.

**21.** Apparatus according to claim 20, **characterized in that** the apparatus comprises a residual heat exchanger / condensate circuit (206), by means of which condensate flows from the condensate sump (150) through the heat exchange medium / heating-water heat exchanger (194).

**22.** Apparatus according to claim 21, **characterized in that** flow of the condensate is effected by means of a pump (200).

**23.** Apparatus according to claim 22, **characterized in that** the heat exchange medium / heating-water heat exchanger (194) is disposed in relation to the residual heat exchanger (44) and a heat exchange medium circuit (62) in such a way that condensate may flow from the condensate sump (150) of the residual heat exchanger (44) by means of convection / gravitational force through the heat exchange medium / heating-water heat exchanger (194).

**24.** Apparatus according to one of claims 17 to 23, **characterized in that** the heat exchange medium circuit (62) comprises a pump (80), which is controlled by a control unit, which is capable of registering an actuation or non-actuation of the burner (32).

**25.** Apparatus according to one of claims 17 to 24, **characterized in that** service water is conveyed by means of a heat exchanger unit (156) through the heat transfer device, thereby enabling the transfer of heat from heat exchange medium to service water.

**26.** Apparatus according to claim 25, **characterized in that** service water is conveyed through the condensate sump (150) of the residual heat exchanger (44).

**27.** Apparatus according to claim 26, **characterized in that** the service water is conveyed through the heat exchange medium / heating-water heat exchanger (194) in order to absorb heat from the heat exchange medium.

**28.** Apparatus according to one of claims 25 to 26, **characterized in that** service water preheated by heat exchange medium is supplied to a heating-water / service-water flow heater (118).

**29.** Apparatus according to one of claims 25 to 26, **characterized in that** the apparatus comprises a warm service-water storage tank (216), to which service water preheated by heat exchange medium is supplied.

**30.** Apparatus according to claim 29, **characterized in that** a service-water supply (210) to the heat transfer unit is connected by means of a three-way mixer (208) to a feeding main for cold service water (154) and to the warm service-water storage tank (216).

**31.** Apparatus according to claim 30, **characterized in that** the warm service-water storage tank (216) and an outlet (221) on the warm service-water storage tank (216) for a conduit (219) between the warm service-water storage tank (216) and the three-way mixer (208) is disposed in such a way that service water may flow by means of gravitational force from the warm service-water storage tank (216) via the three-way mixer (208) into the service-water supply (210).

**32.** Apparatus according to claim 31, **characterized in that** an inlet (214) of a feeding conduit (212) for service water from the heat transfer unit is disposed on the warm service-water storage tank (224) in such a way that heated service water may flow by means of convection to the warm service-water storage tank (216).

**33.** Apparatus according to claim 32, **characterized in that** the cross section of the service-water supply (210) between the three-way mixer (208) and the heat transfer unit is at least as great and at most fifteen times as great as the cross section of the conduit (219) between the warm service-water storage tank (216) and the mixer (208).

**34.** Apparatus according to claim 32 or 33, **characterized in that** the cross section of the service-water supply (210) between the three-way mixer (208) and the heat transfer unit is at least three times as great and at most ten times as great as the cross section of the conduit (219) between the warm service-water storage tank (216) and the three-way mixer (208).

**35.** Apparatus according to one of claims 30 to 34, **characterized in that** the warm service-water storage tank (216) is formed by a first storage tank (222) and a second storage tank (224), wherein the service water in the second storage tank (224) is heated by heating water, and preheated service water is suppliable from the first storage tank (222) to the second storage tank (224) and that the inlet (214) for service water from the heat transfer unit and the outlet (221) to the three-way mixer (208) are disposed on the first storage tank (222).

**36.** Apparatus according to claim 35, **characterized in that** the first storage tank (222) and the second storage tank (224) are connected by a conduit (226).

**37.** Apparatus according to claim 35, **characterized in that** the first storage tank (222) and the second storage tank (224) are connected by a plate, which has openings allowing water from the first storage tank (222) to pass into the second storage tank (224).

**38.** Apparatus according to claim 35, **characterized in that** a heat exchanger unit for heating water is disposed in such a way and has such a shape that it separates the first storage tank (222) from the second storage tank (224) and allows water from the first storage tank (222) to pass into the second storage tank (224).

**39.** Apparatus according to one of claims 17 to 37, **characterized in that** a temperature sensor for monitoring the temperature of the condensate is disposed in the residual heat exchanger (44).

**40.** Apparatus according to one of claims 17 to 38, **characterized in that** a heating-water flow pipe (83) has a mixer (92) for directing heating water from the heating-water return (105) into a heating flow pipe (85).

## Revendications

**1.** Procédé pour la récupération de la chaleur résiduelle dans les fumées d'une installation de chauffage comprenant la chaleur sensible restante et la chaleur latente, notamment lorsqu'un brûleur n'est actionné que par intermittence, dans lequel les fumées rendent de la chaleur à un fluide caloporteur dans un échangeur de chaleur résiduelle et de la chaleur est transmise par le fluide caloporteur à de l'eau de chauffage dans un circuit d'eau de chauffage qui comprend une chaudière à eau de chauffage, **caractérisé en ce que** le transfert de chaleur à l'eau de chauffage a lieu à partir d'une quantité de fluide caloporteur dont le volume est supérieur à environ le triple d'un volume de la chaudière d'eau de chauffage qui absorbe de l'eau de chauffage.

**2.** Procédé selon la revendication 1, **caractérisé en ce que** le volume du fluide caloporteur, par l'intermédiaire duquel de la chaleur est transférée à l'eau de chauffage, est environ cinq fois plus important que le volume de la chaudière d'eau de chauffage qui absorbe de l'eau de chauffage.

**3.** Procédé selon l'une des revendications précédentes, **caractérisé en ce que** la chaleur est transférée à de l'eau de chauffage dans un retour d'eau de chauffage.

**4.** Procédé selon l'une des revendications précédentes, **caractérisé en ce que** de la chaleur est transférée à l'eau de chauffage directement à partir de condensats du fluide caloporteur réchauffés dans l'échangeur de chaleur résiduelle.

**5.** Procédé selon l'une des revendications précédentes, **caractérisé en ce que** pour absorber la chaleur, l'eau de chauffage passe à travers un puisard de condensats de l'échangeur de chaleur résiduelle.

**6.** Procédé selon l'une des revendications 1 à 4, **caractérisé en ce que** pour absorber la chaleur, l'eau de chauffage passe à travers un échangeur de chaleur entre le fluide caloporteur et l'eau de chauffage, qui reçoit du fluide caloporteur réchauffé provenant directement de l'échangeur de chaleur résiduelle.

**7.** Procédé selon l'une des revendications précédentes, **caractérisé en ce que** le fluide caloporteur est transporté dans un circuit de condensats.

**8.** Procédé selon la revendication 7, **caractérisé en ce que** le transport du fluide caloporteur dans le circuit de condensats est associé à l'actionnement du brûleur.

**9.** Procédé selon la revendication 6 et l'une des revendications 7 ou 8, **caractérisé en ce que** le fluide caloporteur passe dans un circuit de condensats de l'échangeur de chaleur résiduelle, qui comprend l'échangeur de chaleur entre le fluide caloporteur et l'eau de chauffage et dans lequel le fluide caloporteur rend de la chaleur à l'eau de chauffage.

**10.** Procédé selon la revendication 9, **caractérisé en ce que** le fluide caloporteur se trouvant dans le circuit de condensats de l'échangeur de chaleur résiduelle est transporté en continu à l'aide d'une pompe.

**11.** Procédé selon la revendication 10, **caractérisé en ce que** le fluide caloporteur se trouvant dans le circuit de condensats de l'échangeur de chaleur résiduelle est transporté par convection ou par gravité.

**12.** Procédé selon l'une des revendications précédentes, **caractérisé en ce que** pour absorber de la chaleur à partir du fluide caloporteur, de l'eau non potable passe à travers le puisard de condensats de l'échangeur de chaleur résiduelle.

**13.** Procédé selon l'une des revendications 1 à 11, **caractérisé en ce que** pour absorber de la chaleur à partir du fluide caloporteur, de l'eau non potable passe à travers l'échangeur de chaleur entre le fluide caloporteur et l'eau de chauffage.

**14.** Procédé selon la revendication 12 ou 13, **caractérisé en ce que** de l'eau non potable préchauffée par du fluide caloporteur est amenée à un échangeur de chaleur entre l'eau non potable et l'eau de chauffage.

**15.** Procédé selon l'une des revendications 12 à 14, **caractérisé en ce que** de l'eau non potable préchauffée par du fluide caloporteur est amenée à un accumulateur d'eau non potable chaude, qui est traversé par de l'eau de chauffage pour le réchauffage de l'eau non potable.

**16.** Procédé selon la revendication 15, **caractérisé en ce que** de l'eau non potable préchauffée par du fluide caloporteur arrive par convection à l'accumulateur d'eau non potable chaude et **en ce qu'**une quantité correspondante d'eau non potable s'écoule par gravité de l'accumulateur d'eau non potable chaude vers l'échangeur de chaleur résiduelle.

**17.** Dispositif pour la récupération de la chaleur résiduelle dans les fumées d'un installation de chauffage comprenant la chaleur sensible restante et la chaleur latente, notamment lorsqu'un brûleur (32) n'est actionné que par intermittence, lequel comprend un échangeur de chaleur résiduelle (44) par lequel de la chaleur est transmise depuis les fumées à un fluide caloporteur, **caractérisé en ce que** le dispositif comprend une installation pour le transfert de chaleur depuis le fluide caloporteur à de l'eau de chauffage, dont le volume recevant du fluide caloporteur est au moins trois fois plus important qu'un volume (35) d'une chaudière d'eau de chauffage (34) qui absorbe de l'eau de chauffage et **en ce que** le dispositif est agencé dans un retour d'eau de chauffage (105) d'un circuit d'eau de chauffage (84).

**18.** Dispositif selon la revendication 17, **caractérisé en ce que** le volume recevant du fluide caloporteur du dispositif de transfert de chaleur est approximativement cinq fois plus important que le volume (35) de la chaudière d'eau de chauffage (34) qui absorbe de l'eau de chauffage.

**19.** Dispositif selon la revendication 17 ou 18, **caractérisé en ce que** le dispositif pour le transfert de chaleur est constituée par le fait que le retour d'eau de chauffage (105) passe à l'aide d'un serpentin d'échange de chaleur (104) à travers un puisard à condensats (150) de l'échangeur de chaleur résiduelle (44).

**20.** Dispositif selon l'une des revendications 16 à 18, **caractérisé en ce que** le dispositif pour le transfert de chaleur est formée par un échangeur de chaleur entre le fluide caloporteur et l'eau de chauffage (194), qui reçoit du fluide caloporteur réchauffé provenant directement de l'échangeur de chaleur résiduelle (44) et à travers lequel passe le retour d'eau de chauffage (105).

**21.** Dispositif selon la revendication 20, **caractérisé en ce que** le dispositif comprend un circuit de condensats d'échangeur de chaleur résiduelle (206), à travers lequel s'écoule du condensat provenant du puisard à condensats (150) en passant par l'échangeur de chaleur entre le fluide caloporteur et l'eau de chauffage (194).

**22.** Dispositif selon la revendication 21, **caractérisé en ce que** l'écoulement du condensat est actionné par une pompe (200).

**23.** Dispositif selon la revendication 22, **caractérisé en ce que** l'échangeur de chaleur entre le fluide caloporteur et l'eau de chauffage (194) est disposé de telle manière par rapport à l'échangeur de chaleur résiduelle (44) et un circuit de fluide caloporteur (62) que des condensats provenant du puisard à condensats (150) de l'échangeur de chaleur résiduelle (44) puissent s'écouler par convection ou par gravité à travers l'échangeur de chaleur entre le fluide caloporteur et l'eau de chauffage (194).

**24.** Dispositif selon l'une des revendications 17 à 23, **caractérisé en ce que** le circuit de fluide caloporteur (62) comprend une pompe (80) commandée par une unité de commande, qui peut consigner l'actionnement ou le non-actionnement du brûleur (32).

**25.** Dispositif selon l'une des revendications 17 à 24, **caractérisé en ce que** de l'eau non potable passe à travers le dispositif pour le transfert de chaleur à l'aide d'une unité d'échange de chaleur (156), de la chaleur pouvant ainsi être transférée du fluide caloporteur à de l'eau non potable.

**26.** Dispositif selon la revendication 25, **caractérisé en ce que** de l'eau non potable passe à travers le puisard à condensats (150) de l'échangeur de chaleur résiduelle (44).

**27.** Dispositif selon la revendication 26, **caractérisé en ce que** l'eau non potable passe à travers l'échangeur de chaleur entre le fluide caloporteur et l'eau de chauffage (194) pour recevoir de la chaleur du fluide caloporteur.

**28.** Dispositif selon l'une des revendications 25 à 26, **caractérisé en ce que** de l'eau non potable préchauffée par du fluide caloporteur est amenée à un chauffe-eau instantané pour l'eau de chauffage et l'eau non potable (118).

**29.** Dispositif selon l'une des revendications 25 à 26, **caractérisé en ce que** le dispositif comprend un accumulateur d'eau non potable chaude (216), auquel est amenée de l'eau non potable préchauffée par du fluide caloporteur.

**30.** Dispositif selon la revendication 29, **caractérisé en ce qu'**une conduite d'amenée d'eau non potable (210) vers l'unité pour le transfert de chaleur est reliée à l'aide d'un mélangeur à trois voies (208) avec une arrivée d'eau non potable froide (154) et avec l'accumulateur d'eau non potable chaude (216).

**31.** Dispositif selon la revendication 30, **caractérisé en ce que** l'accumulateur d'eau non potable chaude (216) et une sortie (221) pour une conduite (219) entre l'accumulateur d'eau non potable chaude (216) et le mélangeur à trois voies (208), sont disposés de telle sorte sur l'accumulateur d'eau non potable chaude (216), que de l'eau non potable puisse s'écouler par gravité hors de l'accumulateur d'eau non potable chaude (216) par l'intermédiaire du mélangeur à trois voies (208) dans la conduite d'amenée d'eau non potable (210).

**32.** Dispositif selon la revendication 31, **caractérisé en ce que** sur l'accumulateur d'eau non potable chaude (224) est disposée une entrée (214) d'une conduite d'arrivée (212) pour de l'eau non potable provenant de l'unité de transfert de chaleur, et ceci de telle manière que de l'eau non potable réchauffée puisse s'écouler par convection vers l'accumulateur d'eau non potable chaude (216).

**33.** Dispositif selon la revendication 32, **caractérisé en ce que** la section de la conduite d'amenée d'eau non potable (210) entre le mélangeur à trois voies (208) et l'unité de transfert de chaleur est au moins aussi importante et au plus quinze fois plus importante que la section de la conduite (219) entre l'accumulateur d'eau non potable chaude (216) et le mélangeur (208).

**34.** Dispositif selon la revendication 32 ou 33, **caractérisé en ce que** la section de la conduite d'amenée d'eau non potable (210) entre le mélangeur à trois voies (208) et l'unité de transfert de chaleur est au moins trois fois plus importante et au plus dix fois plus importante que la section de la conduite (219) entre l'accumulateur d'eau non potable chaude (216) et le mélangeur à trois voies (208).

**35.** Dispositif selon l'une des revendications 30 à 34, **caractérisé en ce que** l'accumulateur d'eau non potable chaude (216) est formé par un premier accumulateur (222) et par un deuxième accumulateur (224), l'eau non potable étant réchauffée par de l'eau de chauffage dans le deuxième accumulateur (224) et de l'eau non potable préchauffée pouvant être amenée du premier accumulateur (222) vers le deuxième accumulateur (224) et **en ce que** l'entrée (214) pour l'eau non potable provenant de l'unité de transfert de chaleur et la sortie (221) vers le mélangeur à trois voies (208) sont disposées sur le premier accumulateur (222).

**36.** Dispositif selon la revendication 35, **caractérisé en ce que** le premier accumulateur (222) et le deuxième accumulateur (224) sont reliés par une conduite (226).

37. Dispositif selon la revendication 35, **caractérisé en ce que** le premier accumulateur (222) et le deuxième accumulateur (224) sont reliés par une plaque comprenant des ouvertures qui permettent le passage d'eau du premier accumulateur (222) vers le deuxième accumulateur (224).

38. Dispositif selon la revendication 35, **caractérisé en ce qu'**une unité d'échange de chaleur pour de l'eau de chauffage est disposée de telle manière et possède une forme telle qu'elle sépare le premier accumulateur (222) du deuxième accumulateur (224) et permet un passage d'eau depuis le premier accumulateur (222) vers le deuxième accumulateur (224).

39. Dispositif selon l'une des revendications 17 à 37, **caractérisé en ce qu'**un capteur de température permettant la surveillance de la température du condensat est disposé dans l'échangeur de chaleur résiduelle (44).

40. Dispositif selon l'une des revendications 17 à 38, **caractérisé en ce qu'**un circuit aller d'eau de chauffage (83) comprend un mélangeur (92) par l'intermédiaire duquel de l'eau de chauffage provenant du circuit de retour d'eau de chauffage (105) peut être dirigée dans un circuit aller de chauffage (85).

Fig. 1

# Fig.2

## Fig.3

## Fig.4

## Fig.5

## Fig.6

Fig.7

Fig.8

## Fig. 9

<u>134</u>        132

<u>136</u>        138

178

180

## Fig.10

<u>134</u>        132

<u>136</u>        138

178

180

# Fig. 11

# Fig. 12

EP 0 810 407 B1

Fig.13